# EUROPEAN PATENT APPLICATION

(11) **EP 4 564 175 A1**
(43) Date of publication of application: **04.06.2025**
(21) Application number: 23849094.0
(22) Date of filing: 28.06.2023
(51) Int. Cl.: G06F 11/30

(54) **FAULT DETECTION METHOD, APPARATUS, ELECTRONIC DEVICE, AND STORAGE MEDIUM**

(30) Priority: 03.08.2022 CN 202210927989
(71) Applicant: Huawei Technologies Co., Ltd., Shenzhen, Guangdong 518129 (CN)
(72) Inventor: WANG, Fenglai, Shenzhen, Guangdong 518129 (CN); LU, Zhihao, Shenzhen, Guangdong 518129 (CN); ZHENG, Xian, Shenzhen, Guangdong 518129 (CN)
(74) Representative: Körber, Martin Hans
(86) International application number: PCT/CN2023/103248
(87) International publication number: WO 2024/027384

(57) **Abstract**

A fault detection method and apparatus, an electronic device, and a storage medium are provided, and relate to the field of computer technologies, to quickly and accurately determine a system fault detection result of a to-be-detected operating system. The fault detection method includes: After obtaining current operating system running data of a to-be-detected operating system, an electronic device may determine current operating system event data of the to-be-detected operating system based on the current operating system running data and a preset event rule. The current operating system event data includes: data generated in a running process of a current operating system process event or thread event in the to-be-detected operating system, and context information associated with the current operating system process event or thread event. Subsequently, the electronic device may determine a system fault detection result of the to-be-detected operating system based on the current operating system running data and the current operating system event data.

## Description

This application claims priority to Chinese Patent Application No. 202210927989.5, filed with the China National Intellectual Property Administration on August 3, 2022 and entitled "FAULT DETECTION METHOD AND APPARATUS, ELECTRONIC DEVICE, AND STORAGE MEDIUM", which is incorporated herein by reference in its entirety.

### TECHNICAL FIELD

This application relates to the field of computer technologies, and in particular, to a fault detection method and apparatus, an electronic device, and a storage medium.

### BACKGROUND

In large-scale cloud services, cloud servers are designed with a large quantity of mechanisms for reliability, availability, and the like in system architectures. With these mechanisms, the cloud servers may tolerate some system faults and continue to run. In this case, a cloud service application detected by the cloud server at an application performance management (Application Performance Monitoring, APM) layer of the cloud server is not faulty. However, the cloud server detects that an operating system of a cloud service may have a potential fault at an Internet technology infrastructure monitoring (Internet Technology Infrastructure Monitoring, ITIM) layer of the cloud server, namely, an operating system (Operating System, OS) layer. Such a detection difference caused from different detection perspectives such as the APM layer and the ITIM layer is referred to as a gray fault.

Currently, during detection on a gray fault, the cloud server usually performs fault diagnosis in a "layer-by-layer drill-down" manner, that is, the cloud server sequentially determines whether an application (Application, APP) at the APM layer is faulty, whether a network function at a network performance monitoring and diagnostics (Network Performance Monitoring and Diagnostics, NPMD) layer is faulty, and whether an operating system at the ITIM layer is faulty.

However, when determining whether the operating system at the ITIM layer is faulty, the cloud server may obtain only basic information such as central processing unit (central processing unit, CPU) usage and a current disk space size of the operating system. Therefore, a general fault detection method further needs to be combined with manual experience to further determine, based on the foregoing basic information, whether the operating system is faulty. The method is time- and labor-consuming, and inefficient.

### SUMMARY

This application provides a fault detection method and apparatus, an electronic device, and a storage medium, and relates to the field of computer technologies, to quickly and accurately detect a fault in an operating system.

To achieve the foregoing objective, this application uses the following technical solutions.

According to a first aspect, this application provides a fault detection method, applied to an electronic device, and including:
After obtaining current operating system running data of a to-be-detected operating system, an electronic device may determine current operating system event data of the to-be-detected operating system based on the current operating system running data and a preset event rule. The current operating system event data includes: data generated in a running process of a current operating system process event or thread event in the to-be-detected operating system, and context information associated with the current operating system process event or thread event. Subsequently, the electronic device may determine a system fault detection result of the to-be-detected operating system based on the current operating system running data and the current operating system event data.

The current operating system running data is data generated in the running process of the current operating system process event or thread event in the to-be-detected operating system. That is, the data usually represents only a metric (for example, CPU usage) of a process event or thread event. Therefore, the current operating system running data is data of a metric type. The current operating system event data includes the data generated in the running process of the current operating system process event or thread event, and the context information associated with the current operating system process event or thread event. To be specific, the data may represent a metric of a process event or thread event, and further represent event content of the process event or the thread event (for example, the thread event is a primary thread event), and/or an event status of the process event or the thread event (for example, the thread event is an abnormal state event), and the like. Therefore, the current operating system event data is data of an event type.

In this case, during detection on a fault at the operating system layer, the electronic device may obtain current operating system running data of a metric type, and determine current operating system event data of an event type based on the current operating system running data. In a subsequent fault detection process of the electronic device, in comparison with a fault detection method performed merely by combining basic information (namely, current operating system running data of a metric type) with manual experience in a general technology, in the fault detection method provided in this embodiment of this application, the system fault detection result of the to-be-detected operating system may be quickly determined based on the current operating system running data and the current operating system event data without manual intervention. This improves fault detection efficiency.

In addition, the current operating system event data includes the context information associated with the current operating system process event or thread event. Therefore, in the fault detection process of the electronic device, in comparison with fault detection performed merely by combining the basic information with the manual experience in the general technology, in the fault detection method provided in this embodiment of this application, the context information in the current operating system event data may be mined, and related content of a context-associated event of the process event or the thread event is obtained based on the context information, to further accurately determine the system fault detection result by combining the content with the current operating system running data. This improves accuracy of the fault detection.

Moreover, the current operating system running data and the current operating system event data have features such as a fine granularity (which may be refined to a thread event or a process event in the to-be-detected system), and wide-range detection data (including the data of a metric type, and the data of an event type). Therefore, the fault detection method provided in this embodiment of this application may also detect a fault detection result of a finer granularity (for example, a fault detection result of a specific thread event or process event). This further improves accuracy of the fault detection.

In addition, in the fault detection method provided in this embodiment of this application, there is no need to add various fault detection tools at the operating system layer of the electronic device, and only a data collection function and a data processing function of the operating system are required to quickly detect a fault. This implements lightweight fault detection based on the operating system.

In a possible implementation, the electronic device includes a system layer processing module, an application layer processing module, and a network layer processing module; and the method for determining the system fault detection result of the to-be-detected operating system specifically includes: The system layer processing module determines the system fault detection result of the to-be-detected operating system.

The fault detection method provided in this embodiment of this application further includes: The system layer processing module may send the system fault detection result to the application layer processing module and the network layer processing module. Correspondingly, the application layer processing module determines an application fault detection result of the electronic device based on the system fault detection result. Correspondingly, the network layer processing module determines a network fault detection result of the electronic device based on the system fault detection result.

It may be learned from the foregoing description that, after determining the system fault detection result, the system layer processing module of the electronic device sends the system fault detection result to the application layer processing module and the network layer processing module, so that the application layer processing module determines the application fault detection result of the electronic device based on the system fault detection result, and the network layer processing module determines the network fault detection result of the electronic device based on the system fault detection result. In this way, the system layer processing module is loosely coupled to both the application layer and the network layer, to quickly and accurately determine a fault detection result of a gray fault of the to-be-detected operating system. This improves fault detection efficiency.

In a possible implementation, the method for determining the system fault detection result of the to-be-detected operating system based on the current operating system running data and the current operating system event data specifically includes: adding a status identifier to the current operating system event data based on a preset status rule, and inputting first data into a pre-trained fault detection model to obtain the system fault detection result. The status identifier includes a normal identifier and an abnormal identifier. The first data includes the current operating system running data and current operating system event data added with the status identifier; the fault detection model is obtained through training based on historical operating system data of the to-be-detected operating system; and the historical operating system data includes historical operating system running data and historical operating system event data.

It may be learned from the foregoing description that, because the fault detection model is obtained through training based on the historical operating system data of the to-be-detected operating system, and the historical operating system data includes the historical operating system running data and the historical operating system event data, when determining the system fault detection result of the to-be-detected operating system, the electronic device may quickly and accurately determine the system fault detection result by using the fault detection model. This improves fault detection efficiency.

In a possible implementation, the fault detection method further includes: obtaining the historical operating system data; and obtaining the fault detection model through training based on a preset fault identification algorithm and the historical operating system data.

It may be learned from the foregoing description that, the electronic device may obtain the fault detection model through training based on the preset fault identification algorithm and the historical operating system data, to quickly and accurately determine the system fault detection result subsequently by using the fault detection model. This improves fault detection efficiency.

In a possible implementation, the preset fault identification algorithm includes a classification algorithm and a parameter optimization algorithm, and the method for obtaining the fault detection model through training based on the preset fault identification algorithm and the historical operating system data specifically includes: adding the status identifier to the historical operating system event data based on the preset status rule; and training a to-be-trained model based on the classification algorithm and second data, to obtain a to-be-adjusted model. The second data includes the historical operating system running data and historical operating system event data added with the status identifier; and the to-be-trained model includes a to-be-trained application feature classification model and a to-be-trained fault classification model. Subsequently, parameter adjustment may be performed on the to-be-adjusted model based on the historical operating system running data and the parameter optimization algorithm, to obtain the fault detection model, where the fault detection model includes an application feature classification model and a fault classification model.

It may be learned from the foregoing description that, because the preset fault identification algorithm includes the classification algorithm and the parameter optimization algorithm, the classification algorithm may be used to perform classification training on an initial model of the fault detection model, and the parameter optimization algorithm may perform parameter adjustment on the model in a classification training process, to obtain the fault detection model, to quickly and accurately determine the system fault detection result subsequently by using the fault detection model. This improves fault detection efficiency.

In a possible implementation, the method for inputting the first data into the pre-trained fault detection model to obtain the system fault detection result specifically includes: inputting the first data into the application feature classification model to obtain an application feature fault detection result; and inputting, into the fault classification model, system data that is in the first data and that corresponds to the application feature fault detection result, to obtain the system fault detection result.

It may be learned from the foregoing description that, because the fault detection model includes an application feature classification model and a fault classification model, the electronic device may sequentially determine different application features and a fault classification corresponding to each application feature based on the application feature classification model and the fault classification mode. This improves fault detection accuracy.

In a possible implementation, the fault detection method further includes:
establishing an application dependency relationship based on the current operating system running data and a preset dependency rule; and establishing an event propagation relationship based on the application dependency relationship. The application dependency relationship indicates a mutual dependency relationship between processes or threads and application instances in the to-be-detected operating system. The event propagation relationship indicates a propagation relationship between application events of the to-be-detected operating system; and the application events are application events corresponding to the processes or the threads and the application instances in the to-be-detected operating system. Subsequently, a root cause event of a system fault that causes the system fault detection result, and a root cause application instance and/or a root cause process or thread may be determined based on the event propagation relationship.

It may be learned from the foregoing description that, after the system fault detection result is determined, to locate a root cause of a faulty event or application of the to-be-detected operating system, the electronic device may further establish the application dependency relationship and the event propagation relationship, to further locate a root cause of a fault.

In a possible implementation, the method for establishing the application dependency relationship based on the current operating system running data and the preset dependency rule specifically includes: constructing an application dependency graph based on the current operating system running data and the preset dependency rule, where the application dependency graph includes a plurality of application nodes and an edge between the application nodes; a primary application node in the plurality of application nodes indicates a primary thread of an application instance in the to-be-detected operating system; and a secondary application node in the plurality of application nodes indicates a dependency instance between a secondary thread of the application instance in the to-be-detected operating system and the application instance in the to-be-detected operating system; an edge between a first application node and a second application node in the plurality of application nodes indicates that there is a dependency relationship between the first application node and the second application node.

It may be learned from the foregoing description that, the electronic device may establish the application dependency relationship in a display form of the application dependency graph, to conveniently and quickly locate the root cause subsequently based on the application dependency graph.

In a possible implementation, the establishing an event propagation relationship based on the application dependency relationship includes: constructing an event propagation graph based on the application dependency graph, where the event propagation graph includes a plurality of event nodes that are in a one-to-one correspondence with the plurality of application nodes and an edge between the event nodes; the plurality of event nodes indicate application instances corresponding to the application events of the to-be-detected operating system; and an edge between a first event node and a second event node in the plurality of event nodes indicates that there is a propagation relationship between a first event corresponding to the first event node and a second event corresponding to the second event node.

It may be learned from the foregoing description that, the electronic device may establish the event propagation relationship in a display form of the event propagation graph, to conveniently and quickly locate the root cause subsequently based on the event propagation graph.

In a possible implementation, the method for determining, based on the event propagation relationship, the root cause event of the system fault that causes the system fault detection result, and the root cause application instance and/or the root cause process or thread specifically includes:
determining a propagation event node that has an edge with a fault event node; and determining an event corresponding to a propagation start event node in the propagation event node as the root cause event, determining an application instance corresponding to the propagation start event node as the root cause application instance, and/or determining a thread corresponding to the propagation start event node as the root cause process or thread. The fault event node is an event node corresponding to a fault event; and the fault event is a fault event corresponding to the system fault detection result.

It may be learned from the foregoing description that, the electronic device may quickly and accurately determine, based on the application dependency graph and the event propagation graph, the root cause event of the system fault that causes the system fault detection result, and the root cause application instance and/or the root cause thread.

In a possible implementation, a system fault that causes the system fault detection result includes one or a combination of the following types of faults: a network input/output I/O fault, a disk input/output I/O fault, a scheduling fault, a memory fault, a process or thread fault, a file system fault, a disk fault, a central processing unit CPU fault, and a container fault.

It may be learned from the foregoing description that, the electronic device may determine system fault detection results of various types of faults or various combinations of types of faults, to detect various types of system gray faults.

According to a second aspect, this application provides a fault detection apparatus, including an obtaining unit and a processing unit. The obtaining unit is configured to obtain current operating system running data of a to-be-detected operating system. The processing unit is configured to determine current operating system event data of the to-be-detected operating system based on the current operating system running data and a preset event rule. The current operating system event data includes: data generated in a running process of a current operating system process event or thread event in the to-be-detected operating system, and context information associated with the current operating system process event or thread event. The processing unit is further configured to determine a system fault detection result of the to-be-detected operating system based on the current operating system running data and the current operating system event data.

In a possible implementation, the electronic device includes a system layer processing module, an application layer processing module, and a network layer processing module. The system layer processing module is configured to determine the system fault detection result of the to-be-detected operating system. The system layer processing module is further configured to send the system fault detection result to the application layer processing module and the network layer processing module. The application layer processing module is configured to determine an application fault detection result of the electronic device based on the system fault detection result. The network layer processing module is configured to determine a network fault detection result of the electronic device based on the system fault detection result.

In a possible implementation, the processing unit is specifically configured to: add a status identifier to the current operating system event data based on a preset status rule, where the status identifier includes a normal identifier and an abnormal identifier; and input first data into a pre-trained fault detection model to obtain the system fault detection result. The first data includes the current operating system running data and current operating system event data added with the status identifier; the fault detection model is obtained through training based on historical operating system data of the to-be-detected operating system; and the historical operating system data includes historical operating system running data and historical operating system event data.

In a possible implementation, the obtaining unit is further configured to obtain the historical operating system data; and the processing unit is further configured to obtain the fault detection model through training based on a preset fault identification algorithm and the historical operating system data.

In a possible implementation, the preset fault identification algorithm includes a classification algorithm and a parameter optimization algorithm, and the processing unit is specifically configured to: add the status identifier to the historical operating system event data based on the preset status rule; and train a to-be-trained model based on the classification algorithm and second data, to obtain a to-be-adjusted model, where the second data includes the historical operating system running data and historical operating system event data added with the status identifier; and the to-be-trained model includes a to-be-trained application feature classification model and a to-be-trained fault classification model; and perform parameter adjustment on the to-be-adjusted model based on the historical operating system running data and the parameter optimization algorithm, to obtain the fault detection model, where the fault detection model includes an application feature classification model and a fault classification model.

In a possible implementation, the processing unit is specifically configured to: input the first data into the application feature classification model to obtain an application feature fault detection result; and input, into the fault classification model, system data that is in the first data and that corresponds to the application feature fault detection result, to obtain the system fault detection result.

In a possible implementation, the processing unit is further configured to establish an application dependency relationship based on the current operating system running data and a preset dependency rule, where the application dependency relationship indicates a mutual dependency relationship between processes or threads and application instances in the to-be-detected operating system; the processing unit is further configured to establish an event propagation relationship based on the application dependency relationship, where the event propagation relationship indicates a propagation relationship between application events of the to-be-detected operating system; and the application events are application events corresponding to the processes or the threads and the application instances in the to-be-detected operating system; and the processing unit is further configured to determine, based on the event propagation relationship, a root cause event of a system fault that causes the system fault detection result, and a root cause application instance and/or a root cause process or thread.

In a possible implementation, the processing unit is specifically configured to construct an application dependency graph based on the current operating system running data and the preset dependency rule, where the application dependency graph includes a plurality of application nodes and an edge between the application nodes; a primary application node in the plurality of application nodes indicates a primary thread of an application instance in the to-be-detected operating system; and a secondary application node in the plurality of application nodes indicates a dependency instance between a secondary thread of the application instance in the to-be-detected operating system and the application instance in the to-be-detected operating system; an edge between a first application node and a second application node in the plurality of application nodes indicates that there is a dependency relationship between the first application node and the second application node.

In a possible implementation, the processing unit is specifically configured to construct an event propagation graph based on the application dependency graph, where the event propagation graph includes a plurality of event nodes that are in a one-to-one correspondence with the plurality of application nodes and an edge between the event nodes; the plurality of event nodes indicate application instances corresponding to the application events of the to-be-detected operating system; and an edge between a first event node and a second event node in the plurality of event nodes indicates that there is a propagation relationship between a first event corresponding to the first event node and a second event corresponding to the second event node.

In a possible implementation, the processing unit is specifically configured to: determine a propagation event node that has an edge with a fault event node, where the fault event node is an event node corresponding to a fault event; and the fault event is a fault event corresponding to the system fault detection result; and determine an event corresponding to a propagation start event node in the propagation event node as the root cause event, and determine an application instance corresponding to the propagation start event node as the root cause application instance, and/or determine a process or thread corresponding to the propagation start event node as the root cause process or thread.

In a possible implementation, a system fault that causes the system fault detection result includes one or a combination of the following types of faults: a network input/output I/O fault, a disk input/output I/O fault, a scheduling fault, a memory fault, a process or thread fault, a file system fault, a disk fault, a central processing unit CPU fault, and a container fault.

According to a third aspect, this application provides an electronic device. The electronic device may include a processor, and a memory, configured to store instructions executable by the processor. The processor is configured to execute the instructions, to implement the fault detection method according to any one of the possible implementations of the first aspect.

According to a fourth aspect, this application provides a computer-readable storage medium. The computer-readable storage medium stores instructions, and when the instructions in the computer-readable storage medium are executed by a processor of an electronic device, the electronic device is enabled to perform the fault detection method according to any one of the possible implementations of the first aspect.

According to a fifth aspect, this application provides a computer program product. The computer program product includes computer instructions, and when the computer instructions are run on a processor of an electronic device, the processor of the electronic device is enabled to perform the fault detection method according to any one of the possible implementations of the first aspect.

It should be understood that the foregoing general descriptions and the following detailed descriptions are merely examples and explanatory, and do not limit this application.

It may be understood that the fault detection apparatus, the electronic device, the computer-readable storage medium, and the computer program product provided in the foregoing aspects are all used in the foregoing fault detection methods. Therefore, for beneficial effects that may be achieved by the fault detection apparatus, the electronic device, the computer-readable storage medium, and the computer program product, refer to beneficial effects in the foregoing fault detection methods. Details are not described herein again.

### BRIEF DESCRIPTION OF DRAWINGS

FIG. 1 is a diagram of a gray fault scenario according to an embodiment of this application;
FIG. 2 is a schematic flowchart of a fault detection method according to a general technology;
FIG. 3 is a diagram of a structure of a fault detection system according to an embodiment of this application;
FIG. 4 is a block diagram of a structure of an internal module of an electronic device according to an embodiment of this application;
FIG. 5 is a schematic flowchart 1 of a fault detection method according to an embodiment of this application;
FIG. 6 is a schematic flowchart 2 of a fault detection method according to an embodiment of this application;
FIG. 7 is a schematic flowchart 3 of a fault detection method according to an embodiment of this application;
FIG. 8 is a schematic flowchart 4 of a fault detection method according to an embodiment of this application;
FIG. 9 is a schematic flowchart 5 of a fault detection method according to an embodiment of this application;
FIG. 10 is a schematic flowchart 6 of a fault detection method according to an embodiment of this application;
FIG. 11 is a schematic flowchart 7 of a fault detection method according to an embodiment of this application;
FIG. 12 is a schematic flowchart 8 of a fault detection method according to an embodiment of this application;
FIG. 13 is a schematic flowchart 9 of a fault detection method according to an embodiment of this application;
FIG. 14 is a schematic flowchart 10 of a fault detection method according to an embodiment of this application;
FIG. 15 is a schematic flowchart 11 of a fault detection method according to an embodiment of this application;
FIG. 16 is a schematic flowchart 12 of a fault detection method according to an embodiment of this application;
FIG. 17 is a schematic flowchart 13 of a fault detection method according to an embodiment of this application;
FIG. 18 is a schematic flowchart 14 of a fault detection method according to an embodiment of this application;
FIG. 19 is a schematic flowchart 15 of a fault detection method according to an embodiment of this application;
FIG. 20 is a diagram of a structure of a fault detection apparatus according to an embodiment of this application;
FIG. 21 is a diagram of a structure of a terminal according to an embodiment of this application; and
FIG. 22 is a diagram of a structure of a server according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In addition, the character "/" in this application generally indicates an "or" relationship between the associated objects. For example, A/B may be understood as "A or B".

The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the description of embodiments, unless otherwise specified, "a plurality of" means two or more.

In addition, the terms "including", "having", or any other variant thereof in descriptions of this application are intended to cover a non-exclusive inclusion. For example, a process, a method, a system, a product, or a device that includes a series of steps or modules is not limited to the listed steps or modules, but optionally further includes an unlisted step or module, or optionally further includes another inherent step or module of the process, the method, the product, or the device.

In addition, in embodiments of this application, the term "example" or "for example" is used to represent giving an example, an illustration, or a description. Any embodiment or design scheme described as an "example" or "for example" in this application should not be explained as being more preferred or having more advantages than another embodiment or design scheme. To be precise, use of the term "example" or "for example" is intended to present a concept in a specific manner.

Before a fault detection method provided in this application is described in detail, related elements, an application scenario, and an implementation environment in this application are first briefly described.

First, the related elements in this application are briefly described.

Metric (metric) data: atomic data that may be aggregated and calculated in an operating system.

For example, the metric data may be a CPU usage, a system memory usage, interface response time, interface response queries per second (queries per second, QPS), or the like.

For another example, the metric data may alternatively be a measurement value that indicates a current depth of a task queue, and may be updated when an element is enqueued or dequeued.

For another example, the metric data may alternatively be a counter that indicates a quantity of hypertext transfer protocol (Hyper Text Transfer Protocol, HTTP) requests, and accumulates when a new request arrives.

The metric data is data values stored based on a time series. Some aggregation calculation, such as summation, averaging, and percentile calculation may be performed on the metric data in a time period, for subsequent data analysis and sorting of the operating system.

Logging (logging) data: Logging is recording each event that occurs during running of an operating system, and may record a discrete event in the operating system and provide detailed information for troubleshooting feedback.

Tracing (Tracing) data: used to record call information within a message request scope. The tracing data is a powerful troubleshooting tool for system performance. The tracing data helps sort out a call relationship between an interface and a service, and helps locate a reason for a slow request or abnormal occurrence.

For example, the tracing data may record an execution process and duration of one remote method call.

For another example, there are usually a plurality of pieces of call information in a microservice. For example, starting from an outermost gateway, a service A calls a service B, a database, a cache, and the like. In an operating system, the tracing data may clearly display all internal call information from a caller to a callee in a specific call chain.

Stateless (Stateless) data: operating system running data in embodiments of this application, indicating data corresponding to one operation in the operating system. In embodiments of this application, a collection probe used for data collection is deployed on an electronic device. The operating system running data collected by the collection probe needs to originate from information carried in the stateless data and common information that may be used by all data.

Stateful (Stateful) data: operating system event data in embodiments of this application, indicating data that has a data storage function in the operating system. This data may store event content of a corresponding process event or thread event (for example, the thread event is a primary thread event) and/or an event status of the corresponding process event or thread event (for example, the thread event is an abnormal state event), and the like. In embodiments of this application, the operating system event data collected by the collection probe usually includes related information of the operating system event data, namely, context information.

When collecting stateful data and stateless data, the data collection probe may determine whether two pieces of data from a same label have a context relationship in the operating system, to differentiate the stateful data from the stateless data, that is, data having a context relationship is the stateful data, and data not having a context relationship is the stateless data.

As described in the Background, in large-scale cloud services, cloud servers are designed with a large quantity of mechanisms for reliability, availability, and the like in system architectures. With these mechanisms, cloud servers may tolerate some system faults and continue to run. In this case, a cloud service application detected by the cloud server at an APM layer of the cloud server is not faulty. However, the cloud server detects that an operating system of the cloud service at an ITIM layer of the cloud server, namely, an OS layer, may have a potential fault. Such a detection difference caused from different detection perspectives such as the APM layer and the ITIM layer is referred to as a gray fault.

The gray fault usually includes non-fatal abnormal faults that cause performance degradation of the operating system, such as a network input/output (Input/Output, I/O) fault (for example, a random packet loss), a disk I/O fault (for example, disk fragmentation), a memory churn/leakage fault, a CPU scheduling/interference fault, and a capacity pressure fault. According to statistical analysis, the gray fault is a most influential type of a fault in a large-scale cloud service production environment.

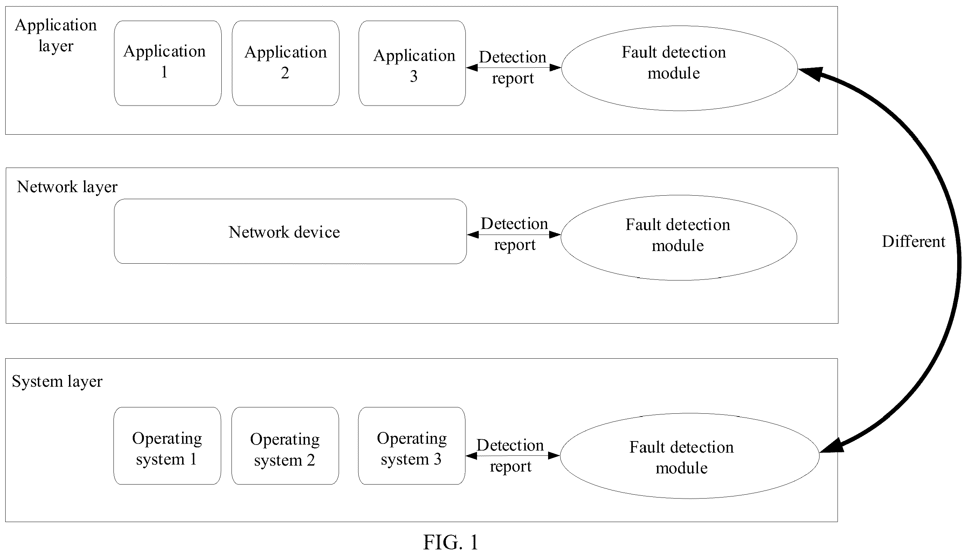

FIG. 1 is a diagram of a gray fault scenario according to an embodiment of this application. As shown in FIG. 1, a fault detection module (observation) 1 at an APM layer may obtain detection reports (probe reports) of apps such as an application (application, APP) 1, an app 2 and an app 3 at the APM layer.

Correspondingly, an observation 2 at an NPMD layer may obtain a detection report of a network device (network device) at the NPMD layer.

Correspondingly, an observation 3 at an ITIM layer may obtain detection reports of OSs such as an OS 1, an OS 2, and an OS 3 at the ITIM layer.

In large-scale cloud services, cloud servers are designed with a large quantity of mechanisms for reliability, availability, and the like in system architectures. Therefore, a fault detection result determined by the observation 1 at the APM layer based on the obtained detection report is different from a fault detection result determined by the ITIM layer based on the obtained detection report, that is, a detection difference, namely, a gray fault, is caused from different detection perspectives such as the APM layer and the ITIM layer.

Currently, during gray fault detection, a fault detection method of artificial intelligence for IT operations (Artificial intelligence for IT Operations, AIOps) is performing fault detection on a top-down (Top-Down) technical system by using the APM layer as a center.

Specifically, in a general fault detection method, fault diagnosis is performed in a "layer-by-layer drill-down" manner from a perspective of the APM layer, and starts by sensing a service level indicator (Service level Indicator, SLI) of an app at the APM layer, that is, a cloud server sequentially determines whether the app at the APM layer is faulty, whether a network function of the NPMD layer is faulty, and whether an operating system at the ITIM layer is faulty.

In this case, general technologies usually use dozens of management and monitoring tools, typically a combination of an APM tool, an NPMD tool, and numerous island-specific ITIM tools. In this case, the APM tool, the NPMD tool, and the ITIM tools are irrelevant, that is, they essentially use different computer languages. As a result, these tools may not obtain information about an event occurring at another layer, and may only detect and analyze respective events at the APM, NPMD, and ITIM layers.

However, when determining whether the operating system at the ITIM layer is faulty, the cloud server may obtain only basic information such as CPU usage and a current disk space size of the operating system. Therefore, a general fault detection method further needs to combine manual experience to further determine, based on the foregoing basic information, whether the operating system is faulty. The method is time- and labor-consuming, and inefficient.

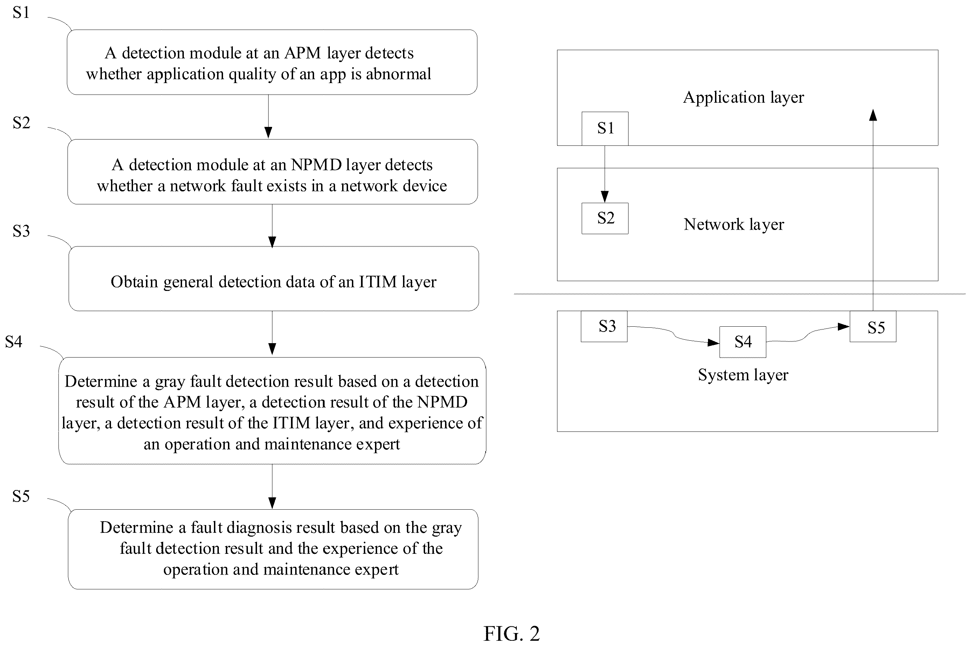

FIG. 2 is a schematic flowchart of a gray fault detection method in a general technology. As shown in FIG. 2, the general gray fault detection method specifically includes the following steps.

S1: A detection module at an APM layer detects whether application quality of an app is abnormal.

Application quality abnormality of the app specifically includes performance degradation of the app, poor user experience (for example, lagging during use), and the like.

S2: A detection module at an NPMD layer detects whether a network fault exists in a network device.

S3: Obtain general detection data of an ITIM layer.

Optionally, the general detection data of the ITIM layer may be obtained by using a data collection module at the ITIM layer, or may be manually obtained.

S4: Determine a gray fault detection result based on a detection result of the APM layer, a detection result of the NPMD layer, a detection result of the ITIM layer, and experience of an operation and maintenance expert.

S5: Determine a fault diagnosis result based on the gray fault detection result and the experience of the operation and maintenance expert.

It may be learned from the foregoing description that, the general fault detection method further needs to combine manual experience to further determine, based on the foregoing basic information, whether the operating system is faulty. The method is time-, and labor-consuming, and inefficient.

For the foregoing problem, this application provides a fault detection method, applied to an electronic device. The method includes: After obtaining current operating system running data of a to-be-detected operating system, the electronic device may determine current operating system event data of the to-be-detected operating system based on the current operating system running data and a preset event rule. Subsequently, the electronic device may determine a system fault detection result of the to-be-detected operating system based on the current operating system running data and the current operating system event data.

The current operating system running data is data generated in the running process of the current operating system process event or thread event in the to-be-detected operating system. That is, the data usually represents only a metric (for example, CPU usage) of a process event or thread event. Therefore, the current operating system running data is data of a metric type. The current operating system event data includes the data generated in the running process of the current operating system process event or thread event, and the context information associated with the current operating system process event or thread event. To be specific, the data may represent a metric of a process event or thread event, and further represent event content of the process event or the thread event (for example, the thread event is a primary thread event), and/or an event status of the process event or the thread event (for example, the thread event is an abnormal state event), and the like. Therefore, the current operating system event data is data of an event type.

In this case, during detection on a fault at the operating system layer, the electronic device may obtain current operating system running data of a metric type, and determine current operating system event data of an event type based on the current operating system running data. In a subsequent fault detection process of the electronic device, in comparison with a fault detection method performed merely by combining basic information (namely, current operating system running data of a metric type) with manual experience in a general technology, in the fault detection method provided in this embodiment of this application, the system fault detection result of the to-be-detected operating system may be quickly determined based on the current operating system running data and the current operating system event data without manual intervention. This improves fault detection efficiency.

In addition, the current operating system event data includes the context information associated with the current operating system process event or thread event. Therefore, in the fault detection process of the electronic device, in comparison with fault detection performed merely by combining the basic information with the manual experience in the general technology, in the fault detection method provided in this embodiment of this application, the context information in the current operating system event data may be mined, and related content of a context-associated event of the process event or the thread event is obtained based on the context information, to further accurately determine the system fault detection result by combining the content with the current operating system running data. This improves accuracy of the fault detection.

Moreover, the current operating system running data and the current operating system event data have features such as a fine granularity (which may be refined to a thread event or a process event in the to-be-detected system), and wide-range detection data (including the data of a metric type, and the data of an event type). Therefore, the fault detection method provided in this embodiment of this application may also detect a fault detection result of a finer granularity (for example, a fault detection result of a specific thread event or process event). This further improves accuracy of the fault detection.

In addition, in the fault detection method provided in this embodiment of this application, there is no need to add various fault detection tools at the operating system layer of the electronic device, and only a data collection function and a data processing function of the operating system are required to quickly detect a fault. This implements lightweight fault detection based on the operating system.

The following describes implementations of embodiments in detail with reference to the accompanying drawings.

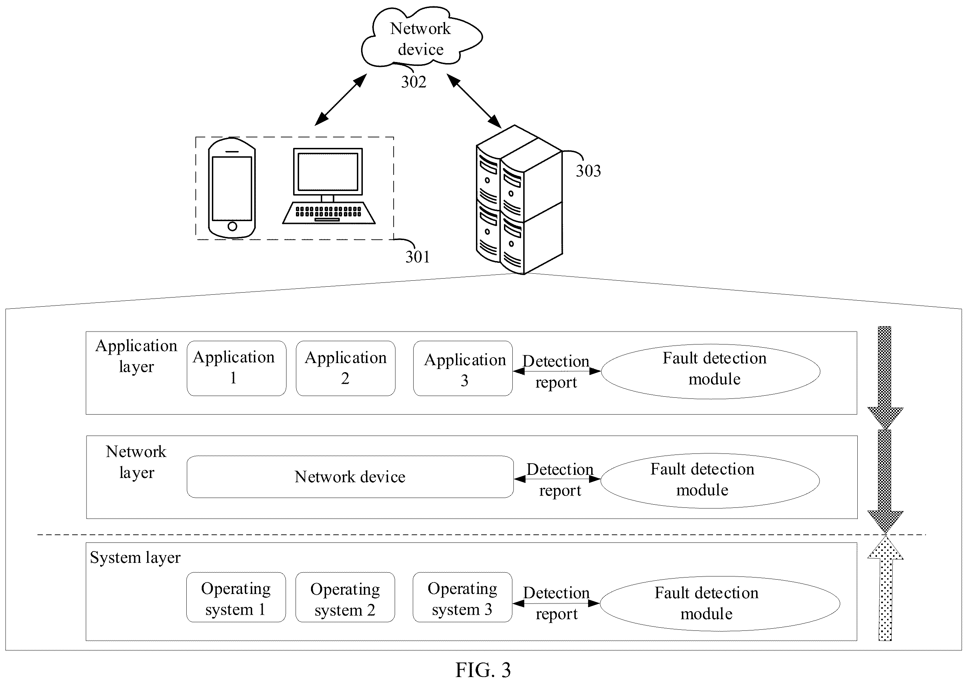

The fault detection method provided in this embodiment of this application may be applied to a fault detection system. FIG. 3 is a diagram of a structure of a fault detection system according to an embodiment of this application.

As shown in FIG. 3, the fault detection system provided in this embodiment of this application includes a cloud terminal 301, a network device 302, and a cloud server 303. The network device 302 is in communication connection to both the cloud terminal 301 and the cloud server 303. The cloud terminal 301 is also referred to as a virtual terminal. Based on reliable and high-speed network communication, mass storage implementation, and multi-process or multi-thread, and highly efficient CPU technologies, the cloud terminal 301 uses a remote virtualization technology to implement a management solution of a customer terminal device. Hardware, running software, and hard disk data of a remote terminal device are separated into different transmission layers, to form a dynamic architecture of a host and a client, and implement an all-in-one management platform of centralized management and dynamic grouping-based delegated management. In embodiments of this application, the cloud terminal 301 may request a service resource provided by the cloud server 303, and provide a corresponding cloud service for a user.

The cloud server is a simple, efficient, secure, and reliable computing service with a scalable processing capability. In embodiments of this application, the cloud server 303 may provide the service resource for the cloud terminal 301, so that the cloud terminal 301 provides the corresponding cloud service for the user.

The cloud terminal 301 in FIG. 3 may be a device that provides a user with voice and/or data connectivity, a handheld device having a wireless connection function, or another processing device connected to a wireless modem. The cloud terminal 301 may communicate with one or more core networks via a radio access network (radio access network, RAN). The wireless terminal may be a mobile terminal, for example, a mobile phone (also referred to as a "cellular" phone), and a computer having a mobile terminal, or may be a portable, pocket-sized, handheld, computer built-in or vehicle-mounted mobile apparatus that exchanges a language and/or data with the radio access network, for example, a mobile phone, a tablet computer, a notebook computer, a desktop computer, a netbook, or a personal digital assistant (Personal Digital Assistant, PDA).

The network device 302 in FIG. 3 may be a base station, a base station controller, or the like for wireless communication. In embodiments of this application, the base station may be a base station (base transceiver station, BTS) in a global system for mobile communication (global system for mobile communication, GSM), or code division multiple access (code division multiple access, CDMA), a nodeB (nodeB) in wideband code division multiple access (wideband code division multiple access, WCDMA), an eNB (eNB) in an internet of things (internet of things, IoT) or a narrowband internet of things (narrowband internet of things, NB-IoT), or a base station in a future 5G mobile communication network or a future evolved public land mobile network (public land mobile network, PLMN). This is not limited in embodiments of this application.

The cloud server 303 in FIG. 3 may be one server in a server cluster (including a plurality of servers), a chip in the server, or a system on chip in the server, or may be implemented by using a virtual machine (virtual machine, VM) deployed on a physical machine. This is not limited in embodiments of this application.

In a possible implementation, a fault detection method provided in an embodiment of this application is mainly used to detect a gray fault at an operating system layer of the cloud server 303.

In still another possible implementation, a fault detection method provided in an embodiment of this application may be further used to detect a gray fault at an operating system layer of the cloud terminal 301, or another gray fault of an electronic device having an operating system layer, a network layer, and an application layer. This is not limited in this application.

For ease of description, this embodiment of this application is described by using an example in which a gray fault at an operating system layer of the cloud server 303 is detected.

As shown in FIG. 3, the cloud server 303 may include an APM layer, an NPMD layer, and an ITIM layer.

An observation 1 at the APM layer may obtain detection reports of apps such as an app 1, an app 2, and an app 3 at the APM layer, and determine an application fault detection result of the APM layer based on the detection report.

Correspondingly, an observation 2 at the NPMD layer may obtain a detection report of a network device at the NPMD layer, and determine a network fault detection result of the NPMD layer based on the detection report.

In embodiments of this application, the ITIM layer provides a general infrastructure detection capability, and an identification and diagnosis capability of the gray fault at the operating system.

That is, an observation 3 at the ITIM layer may obtain detection reports of OSs such as an OS 1, an OS 2, and an OS 3 at the ITIM layer according to the fault detection method provided in an embodiment of this application, and determine a fault detection result of the ITIM layer based on the detection report.

Subsequently, the observation 3 at the ITIM layer may send a system fault detection result of the ITIM layer to the observation 1 at the APM layer and the observation 2 at the NPMD layer, so that the observation 1 at the APM layer and the observation 2 at the NPMD layer determine the gray fault with reference to the system fault detection result of the ITIM layer.

Correspondingly, the observation 1 at the APM layer may also send an application fault detection result of the APM layer to the observation 2 at the NPMD layer and the observation 3 at the ITIM layer, so that the observation 2 at the NPMD layer and the observation 3 at the ITIM layer determine the gray fault with reference to the application fault detection result of the APM layer.

Correspondingly, the observation 2 at the NPMD layer may also send a network fault detection result of the NPMD layer to the observation 1 at the APM layer and the observation 3 at the ITIM layer, so that the observation 1 at the APM layer and the observation 3 at the ITIM layer determine the gray fault with reference to the network fault detection result of the NPMD layer.

In this way, according to the fault detection method provided in an embodiment of this application, a detection tool at the APM layer, a detection tool at the NPMD layer, and an islanding detection tool at the ITIM layer may be integrated with each other. A top-down fault detection method of artificial intelligence for IT operations from an application perspective in a general technology is combined with a bottom-up solution of proactive gray fault identification and localization from an operating system perspective in this embodiment of this application, to reduce manual intervention and improve operation and maintenance efficiency.

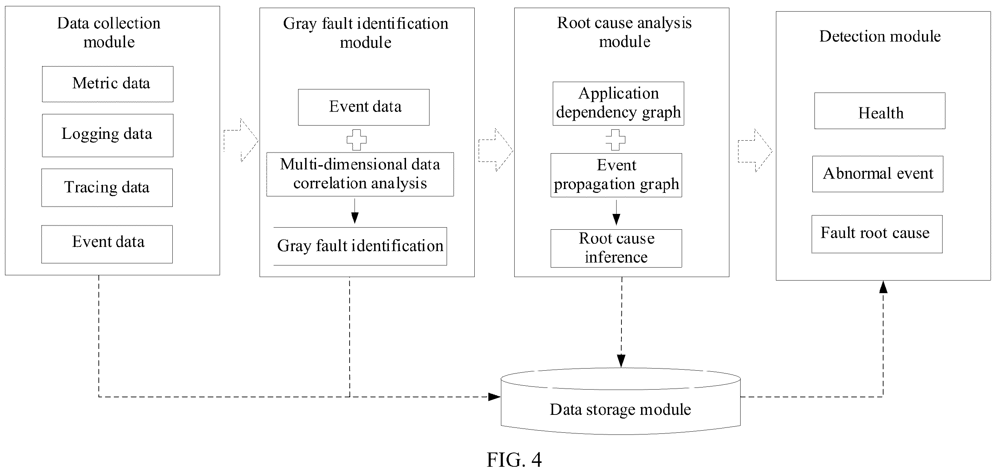

FIG. 4 is a block diagram of a structure of an internal module of an electronic device according to an embodiment of this application. The electronic device may collect data such as metric data, logging data, and tracing data in an operating system, determine data such as an event (Event) based on information such as the metric data, the logging data, and the tracing data, and then perform data analysis to identify a gray fault. Subsequently, an application dependency graph and an event propagation graph are constructed for root cause inference, to detect health and the gray fault of the operating system, and locate a root cause.

The electronic device may be the cloud server 303 or the cloud terminal 301 in FIG. 3, or another electronic device having an operating system layer, a network layer, and an application layer. This is not limited in embodiments of this application.

As shown in FIG. 4, the electronic device provided in embodiments of this application may include a data collection module, a gray fault identification module, a root cause analysis module, a detection module, and a data storage module.

The data collection module is configured to: collect the data such as the metric data, the logging data, and the tracing data in the operating system (namely, operating system running data in embodiments of this application), and generate event data (namely, operating system event data in embodiments of this application) based on the data such as the metric data, the logging data, and the tracing data.

Event data indicates a real-time abnormal event generated based on the data such as the metric data, the logging data, and the tracing data.

The gray fault identification module is configured to complete gray fault identification based on the event data generated by the data such as the metric data, the logging data, and the tracing data, and correlation analysis on multi-dimensional long-cycle time series data (namely, metric data, logging data, and tracing data in a plurality of time periods).

The root cause analysis module is configured to: generate the application dependency graph through static service deployment, generate the event propagation graph based on domain knowledge and event dynamic, and perform root cause inference on an identified gray fault based on the constructed application dependency graph and event propagation graph.

The detection module is configured to provide a function or data interface for displaying the health, an abnormal event, and a fault root cause of the operating system.

The data storage module is configured to: store the data collected by the data collection module, the gray fault identified by the gray fault identification module, and the fault root cause determined by the root cause analysis module, and provide data required by the detection module for the detection module.

Based on the functions of the modules in the electronic device, the following describes in detail the technical solutions provided in embodiments of this application.

A fault detection method provided in an embodiment of this application may be applied to an electronic device.

The following describes in detail the fault detection method provided in this embodiment of this application with reference to the accompanying drawings.

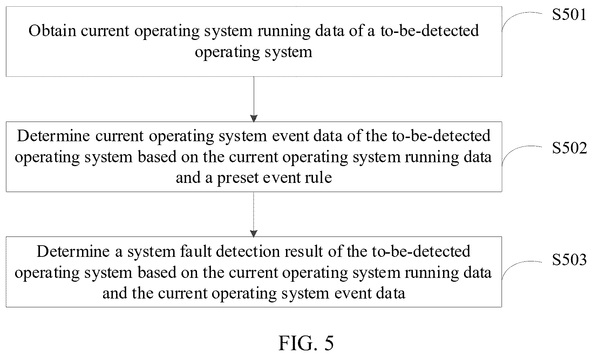

FIG. 5 shows a fault detection method according to an embodiment of this application. As shown in FIG. 5, the fault detection method specifically includes the following steps.

S501: An electronic device obtains current operating system running data of a to-be-detected operating system.

Specifically, during gray fault detection, the electronic device may trigger a fault detection procedure based on two trigger conditions.

A first trigger condition is that the electronic device proactively triggers the fault detection procedure. In this case, the electronic device may directly obtain the current operating system running data of the to-be-detected operating system, to start the fault detection.

Optionally, that the electronic device proactively triggers the fault detection procedure may be that a scheduled task is preset. When a current moment meets time set by the scheduled task, the electronic device may directly obtain the current operating system running data of the to-be-detected operating system, to start the fault detection.

Optionally, the scheduled task may be a periodic task. In this case, the electronic device may periodically obtain the current operating system running data of the to-be-detected operating system, to start the fault detection. This improves fault detection efficiency of the to-be-detected operating system of the electronic device.

The second trigger condition is that the electronic device passively triggers the fault detection procedure. In this case, the electronic device may obtain the current operating system running data of the to-be-detected operating system in response to a received fault detection instruction, to start the fault detection.

Optionally, the fault detection instruction may be sent by an APM layer or an NPMD layer, or may be generated in response to a fault detection operation of a user. This is not limited in embodiments of this application.

In a possible implementation, the operating system running data may be data such as metric data, logging data, and tracing data of the to-be-detected operating system. The data such as the metric data, the logging data, and the tracing data is also referred to as stateless data, and may represent data of a metric type generated in a running process of the current operating system.

For descriptions of the data such as the metric data, the logging data, and the tracing data, refer to the brief descriptions of related elements in this application. Details are not described herein again.

The current operating system running data means system running data in a current time period. When performing the fault detection in the current time period, the electronic device needs to obtain the system running data in the current time period, to ensure that a system gray fault in the current time period is accurately detected.

In a possible implementation, if the electronic device wants to detect a system gray fault in a historical time period, the electronic device may obtain system running data in the historical time period.

In a possible implementation, with reference to FIG. 3, the electronic device may call the data collection module to obtain the current operating system running data of the to-be-detected operating system.

S502: The electronic device determines current operating system event data of the to-be-detected operating system based on the current operating system running data and a preset event rule.

The current operating system event data includes: data generated in a running process of a current operating system process event or thread event in the to-be-detected operating system, and context information associated with the current operating system process event or thread event.

In a possible implementation, the operating system event data may be event data of the to-be-detected operating system. The event data is also referred to as stateful data, and may indicate data generated in a process of a current operating system process event or thread event, and context information associated with the current operating system process event or thread event. For descriptions of the event data, refer to the brief descriptions of related elements in this application. Details are not described herein again.

In a possible implementation, the preset event rule may be pre-established based on human experience or domain knowledge. After obtaining the current operating system running data, the electronic device may determine the current operating system event data of the to-be-detected operating system based on the current operating system running data and the preset event rule.

That is, the current operating system running data may be single-point running data, and the current operating system event data may be event data determined based on a plurality of pieces of running data in one cycle.

For example, the electronic device detects CPU usage of the to-be-detected operating system once every five seconds, and CPU usage may be detected 12 times in one minute in the current time period, to obtain 12 CPU usage detection results. In this case, the 12 CPU usage detection results are 12 pieces of current operating system running data.

The preset event rule includes: When all CPU usage is higher than a preset value, it is considered as a fault event. When CPU usage in first 40 seconds in the minute is all higher than the preset value, the electronic device may obtain eight CPU usage detection results in the first 40 seconds, and determine, based on the eight CPU usage detection results, that a CPU fault event occurs in the first 40 seconds in the minute, that is, determine the current operating system event data.

In a possible implementation, the current operating system event data may further include an event of a system activity type, like vulnerability fixing and software upgrade in the current time period.

For another example, preset current operating system running data obtained by the preset electronic device includes: CPU usage of the to-be-detected operating system at the current moment is first usage, and a running thread of the to-be-detected operating system at the current moment is a thread A. The preset event rule includes: CPU usage of the to-be-detected operating system at a same moment is CPU usage of the thread A. In this case, that the electronic device may determine the current operating system event data of the to-be-detected operating system based on the current operating system running data and the preset event rule includes: CPU usage occupied by the thread A in a running process at the current moment is the first usage.

In addition, the electronic device may further obtain context information of the running process of the thread A at the current moment, for example, a running instruction sent by a thread B to the thread A.

In a possible implementation, with reference to FIG. 3, the electronic device may call the data collection module to determine the current operating system event data of the to-be-detected operating system based on the current operating system running data and the preset event rule.

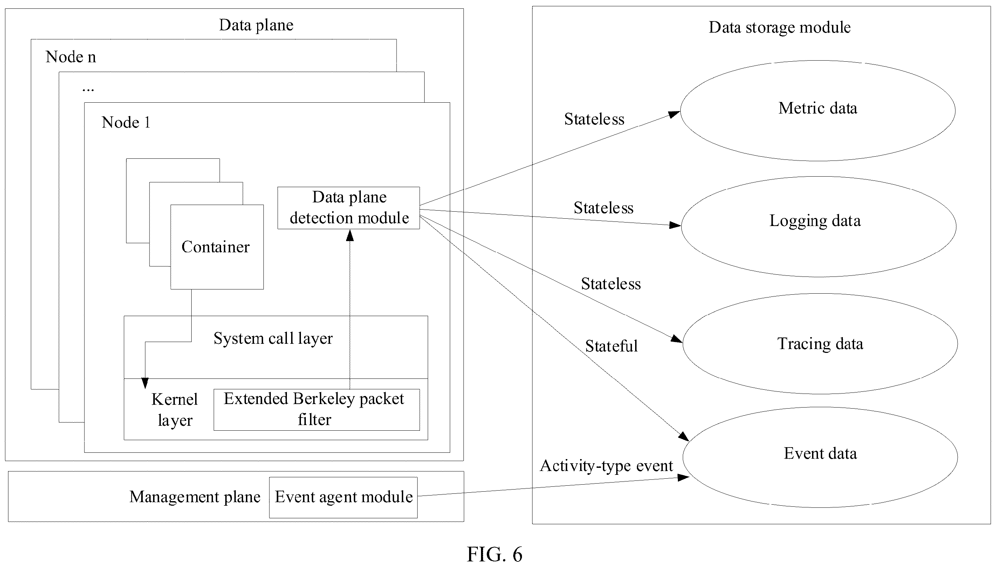

In still another possible implementation, with reference to FIG. 3, as shown in FIG. 6, the to-be-detected operating system includes a data plane and a management plane.

Data in the data plane means data of usage of various system resources at an ITIM layer by an app at the APM layer during running at the ITIM layer, and may directly reflect various metrics and usage of the app.

The data plane may include a plurality of thread nodes (for example, a node 1, ..., a node n in FIG. 6), and each node may include a plurality of containers. Each container may be connected to a kernel layer by using a system call layer. A management module at the kernel layer may develop a data plane probe module (Probe Agent) based on an extended Berkeley packet filter (extended Berkeley Packet Filter, eBPF) technology.

During the fault detection, the data collection module may obtain, based on the probe agent, the stateless data such as the metric data, the logging data, and the tracing data from the data plane and the stateful data in the event data, and stores the obtained data in the data storage module.

Data of the management plane means OS management data during running of an OS at the ITIM layer, for example, OS version upgrade event data and disk capacity expansion event data.

During the fault detection, the data collection module may obtain, based on an event agent (event Agent) module of the management plane, activity-type event data in event data of the management plane, and store the obtained data in the data storage module.

S503: The electronic device determines a system fault detection result of the to-be-detected operating system based on the current operating system running data and the current operating system event data.

In a possible implementation, after obtaining the current operating system running data and the current operating system event data, the electronic device may determine the system fault detection result of the to-be-detected operating system by using a pre-trained fault detection model. For a specific detection process, refer to descriptions in the following embodiments.

In still another possible implementation, the electronic device may pre-store system fault detection results corresponding to a plurality of types of system data (including the system running data and the operating system event data). After obtaining the current operating system running data and the current operating system event data, the electronic device may read the system data and the system fault detection results, to determine a system fault detection result of the to-be-detected operating system in a current time period.

The system fault detection results corresponding to the plurality of types of system data (including the system running data and the operating system event data) may be determined by the electronic device based on the system data in the historical time period and a system fault detection result in the historical time period, or may be pre-established based on the domain knowledge. This is not limited in embodiments of this application.

In a possible implementation, a system fault that causes the system fault detection result includes one or a combination of the following types of faults: a network I/O fault, a disk I/O fault, a scheduling fault, a memory fault, a process or thread fault, a file system fault, a disk fault, a CPU fault, and a container fault. In this way, the electronic device may detect system fault detection results of various types of faults or various combinations of types of faults.

The current operating system running data is data generated in the running process of the current operating system process event or thread event in the to-be-detected operating system. That is, the data usually represents only a metric (for example, CPU usage) of a process event or thread event. Therefore, the current operating system running data is data of a metric type. The current operating system event data includes the data generated in the running process of the current operating system process event or thread event, and the context information associated with the current operating system process event or thread event. To be specific, the data may represent a metric of a process event or thread event, and further represent event content of the process event or the thread event (for example, the thread event is a primary thread event), and/or an event status of the process event or the thread event (for example, the thread event is an abnormal state event), and the like. Therefore, the current operating system event data is data of an event type.

In this case, during detection on a fault at the operating system layer, the electronic device may obtain current operating system running data of a metric type, and determine current operating system event data of an event type based on the current operating system running data. In a subsequent fault detection process of the electronic device, in comparison with a fault detection method performed merely by combining basic information (namely, current operating system running data of a metric type) with manual experience in a general technology, in the fault detection method provided in this embodiment of this application, the system fault detection result of the to-be-detected operating system may be quickly determined based on the current operating system running data and the current operating system event data without manual intervention. This improves fault detection efficiency.

In addition, the current operating system event data includes the context information associated with the current operating system process event or thread event. Therefore, in the fault detection process of the electronic device, in comparison with fault detection performed merely by combining the basic information with the manual experience in the general technology, in the fault detection method provided in this embodiment of this application, the context information in the current operating system event data may be mined, and related content of a context-associated event of the process event or the thread event is obtained based on the context information, to further accurately determine the system fault detection result by combining the content with the current operating system running data. This improves accuracy of the fault detection.

Moreover, the current operating system running data and the current operating system event data have features such as a fine granularity (which may be refined to a thread event or a process event in the to-be-detected system), and wide-range detection data (including the data of a metric type, and the data of an event type). Therefore, the fault detection method provided in this embodiment of this application may also detect a fault detection result of a finer granularity (for example, a fault detection result of a specific thread event or process event). This further improves accuracy of the fault detection.

In addition, in the fault detection method provided in this embodiment of this application, there is no need to add various fault detection tools at the operating system layer of the electronic device, and only a data collection function and a data processing function of the operating system are required to quickly detect a fault. This implements lightweight fault detection based on the operating system.

In a possible implementation, in a large-scale cloud scenario including a large quantity of cloud terminals and cloud servers, because of complexity of service deployment of the cloud servers, there may be a large quantity of nodes (namely, processes or threads of the cloud servers) of the cloud servers and long links. In this case, considering that time accumulation effect may cause a lag in data propagation effect corresponding to the process event or the thread event, if a general fault detection method is used, fault detection efficiency may be low. In this embodiment of this application, the context information in the current operating system event data may be mined with reference to the current operating system running data and the current operating system event data based on the features of the current operating system running data and the current operating system event data, such as the fine granularity (which may be refined to the thread event or the process event in the to-be-detected system), and the wide-range detection data (including the data of a metric type, and the data of an event type), to quickly and accurately determine the system fault detection result of the to-be-detected operating system.

For example, in an actual application scenario, according to data statistics, it takes 0.5 days to 7 days to determine a system fault detection result of a to-be-detected operating system according to the general fault detection method. However, in this embodiment of this application, with reference to the current operating system running data and the current operating system event data, it takes only 0.5 hours to 72 hours to quickly and accurately determine the system fault detection result of the to-be-detected operating system. Compared with the general technology with a fault detection speed at a level of "days", the fault detection method provided in this embodiment of this application may reduce a fault detection speed to a level of "minutes", improving fault detection efficiency.

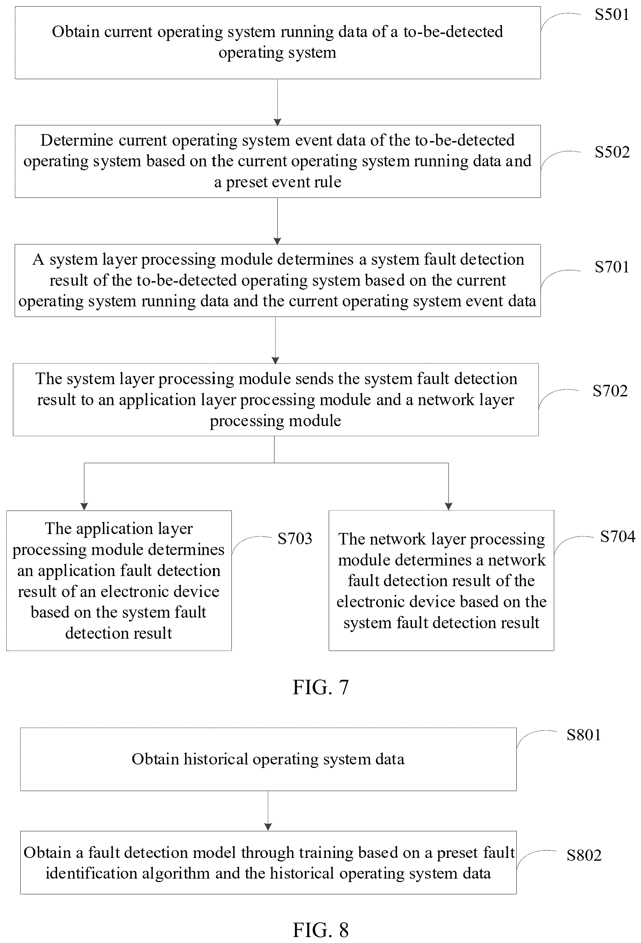

In a possible implementation, the electronic device may include a system layer processing module, an application layer processing module, and a network layer processing module. In this case, with reference to FIG. 5, as shown in FIG. 7, the method in which the electronic device determines the system fault detection result of the to-be-detected operating system based on the current operating system running data and the current operating system event data in S503 specifically includes the following steps.

S701: A system layer processing module determines the system fault detection result of the to-be-detected operating system based on the current operating system running data and the current operating system event data.

To improve gray fault detection efficiency, after determining the system fault detection result of the to-be-detected operating system, the electronic device may further determine the gray fault with reference to a fault detection result of the APM layer and/or the NPMD layer. In this case, the fault detection method provided in this embodiment of this application further includes the following steps.

S702: The system layer processing module sends the system fault detection result to the application layer processing module and the network layer processing module.

Specifically, because the system fault detection result is a fault detection result of the system layer of the to-be-detected operating system, to further determine the gray fault of the electronic device with reference to an application fault detection result of the application layer and/or a network fault detection result of the network layer, the system layer processing module may send the system fault detection result to the application layer processing module and the network layer processing module.

S703: The application layer processing module determines the application fault detection result of the electronic device based on the system fault detection result.

Specifically, after receiving the system fault detection result sent by the system layer processing module, the application layer processing module may determine the application fault detection result of the electronic device based on the system fault detection result.

In a possible implementation, the application layer processing module may determine, based on the system fault detection result sent by the system layer processing module, whether an application corresponding to the system fault detection result is faulty, and when determining that the application is faulty, determine this application fault as the application fault detection result.

In still another possible implementation, the application layer processing module may first determine an application fault at the application layer based on a fault detection tool of the application layer. Then, the application layer processing module further determines the application fault detection result of the electronic device with reference to the detected application fault and the system fault detection result sent by the system layer processing module.

S704: The network layer processing module determines the network fault detection result of the electronic device based on the system fault detection result.

Specifically, after receiving the system fault detection result sent by the system layer processing module, the network layer processing module may determine the network fault detection result of the electronic device based on the system fault detection result.

In a possible implementation, the network layer processing module may determine, based on the system fault detection result sent by the system layer processing module, whether a network device corresponding to the system fault detection result is faulty, and when determining that the network device is faulty, determine this network device fault as the network fault detection result.

In still another possible implementation, the network layer processing module may first determine a network device fault of the network layer based on a fault detection tool of the network layer. Then, the network layer processing module further determines the network fault detection result of the electronic device with reference to the detected network device fault and the system fault detection result sent by the system layer processing module.

In a general technology, when an electronic device detects a gray fault, an application layer processing module needs to first detect an application fault detection result of an APM layer. Then, after the application fault detection result of the APM layer is determined, a network layer processing module determines a network fault detection result of an NPMD layer. Finally, a system layer processing module obtains operating system running data at an ITIM layer, and determines a final gray fault detection result with reference to the manual experience.

It may be learned from the foregoing description that, in the gray fault detection method in the general technology, the APM layer, the NPMD layer, and the ITIM layer are tightly coupled, and the electronic device needs to sequentially determine a fault detection result of each layer, to determine the final gray fault detection result. In this application, the ITIM layer is loosely coupled to both the APM layer and the NPMD layer. That is, the APM layer, the NPMD layer, and the ITIM layer may independently detect a fault detection result of the current layer. In comparison with the general technology, in this embodiment of this application, layer-by-layer drill-down steps are canceled. This improves fault detection efficiency.

In addition, the system layer processing module at the ITIM layer may provide independent data collection, gray fault identification, and root cause analysis capabilities, and after determining the system fault detection result, may send the system fault detection result to the application layer processing module and the network layer processing module. In this case, the application layer processing module determines the application fault detection result of the electronic device based on the system fault detection result, and the network layer processing module determines the network fault detection result of the electronic device based on the system fault detection result. Compared with the general fault detection method in which the APM layer, the NPMD layer, and the ITIM layer need to sequentially determine the fault detection result, the fault detection method provided in this embodiment of this application may be used to enable the APM layer, the NPMD layer, and the ITIM layer to synchronously determine the fault detection result corresponding to the corresponding layer, and determine the gray fault detection result with reference to the detection results of all layers, improving fault detection efficiency.

In addition, in the general fault detection method, after determining the fault detection result corresponding to the corresponding layer, the APM layer, the NPMD layer, and the ITIM layer need to determine a gray fault by using the manual experience. That is, the fault detection result corresponding to each layer is independently output to an output platform corresponding to manual detection, and the fault detection result corresponding to each layer is not combined for processing. As a result, the fault detection result corresponding to each layer forms islanding data. However, in this embodiment of this application, the gray fault may be proactively identified and located bottom-up from a perspective of the to-be-detected operating system at the ITIM layer with reference to a general top-down fault detection method of artificial intelligence for IT operations from a perspective of the APM layer. This may eliminate data islands, and further improve gray fault detection accuracy.

In a possible implementation, the electronic device may determine the system fault detection result of the to-be-detected operating system based on the trained fault detection model, to quickly and accurately determine the system fault detection result of the to-be-detected operating system. In this case, the fault detection method provided in this embodiment of this application may include: a procedure in which the electronic device obtains a fault detection model through training (briefly referred to as a "fault detection model training" procedure), and a procedure in which the electronic device determines the system fault detection result of the to-be-detected operating system based on the fault detection model (briefly referred to as a "fault detection" procedure).

The following first describes the "fault detection model training" procedure.

As shown in FIG. 8, the "fault detection model training" procedure provided in this embodiment of this application specifically includes the following steps.

S801: The electronic device obtains historical operating system data.

The historical operating system data includes historical operating system running data and historical operating system event data.

The historical operating system running data means system running data in a historical time period. The historical operating system event data means system event data in the historical time period.

The historical operating system event data includes: data generated in a running process of a historical operating system process event or thread event in the to-be-detected operating system, and context information associated with the historical operating system process event or thread event.

The electronic device may first obtain the system running data in the historical time period (namely, the historical operating system running data), and then determine the historical operating system event data of the to-be-detected operating system based on the historical operating system running data and the preset event rule.

For descriptions explaining that the electronic device obtains the system running data in the historical time period, and determines the historical operating system event data of the to-be-detected operating system based on the historical operating system running data and the preset event rule, refer to the related descriptions explaining that the electronic device obtains the current operating system running data of the to-be-detected operating system and determines the current operating system event data of the to-be-detected operating system based on the current operating system running data and the preset event rule in S501. Details are not described herein again.

When obtaining the fault detection model through training, the electronic device may perform model training based on the system running data and the operating system event data in the historical time period.

For descriptions of the system running data in the historical time period, refer to the related descriptions of the system running data in the current time period in S501. Details are not described herein again.

S802: The electronic device obtains the fault detection model through training based on a preset fault identification algorithm and the historical operating system data.

In a possible implementation, to improve model precision of the fault detection model, the electronic device may obtain raw data of the historical time period corresponding to the historical operating system running data. Then, the electronic device may perform a preprocessing operation on the raw data, to obtain the historical operating system running data, and provide accurate reference data for obtaining the fault detection model through subsequent training.

The preprocessing operation is used to perform data cleaning on the raw data, to obtain complete, smooth, and noise-free current operating system running data.

Optionally, the preprocessing operation may include operations such as missing data completion, anomaly noise reduction, and metric smoothing. This is not limited in embodiments of this application.

When obtaining the fault detection model through training, the electronic device may obtain the fault detection model through training based on a conjugate gradient method and the historical operating system data, a gradient descent method and the historical operating system data, or another general fault identification algorithm and the historical operating system data. This is not limited in embodiments of this application.

It may be learned from the foregoing description that, the electronic device may obtain the fault detection model through training based on the preset fault identification algorithm and the historical operating system data, to quickly and accurately determine the system fault detection result subsequently by using the fault detection model. This improves fault detection efficiency.

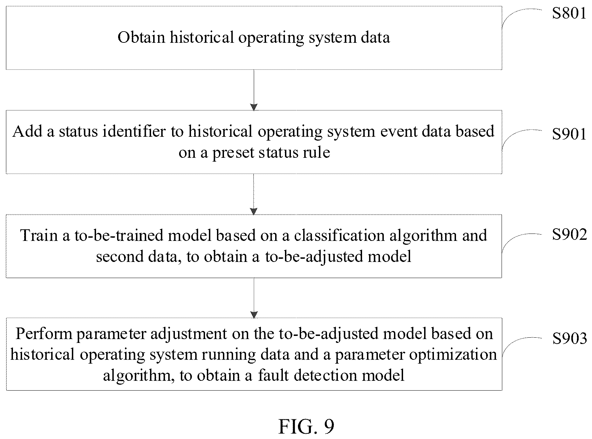

In a possible implementation, the preset fault identification algorithm may include a classification algorithm and a parameter optimization algorithm. The classification algorithm is used to perform classification training on an initial model of the fault detection model. The parameter optimization algorithm may adjust parameters of the model in a classification training process, to obtain the fault detection model. In this case, with reference to FIG. 8, as shown in FIG. 9, in S802, the method in which the electronic device obtains the fault detection model through training based on the preset fault identification algorithm and the historical operating system data specifically includes the following steps.

S901: The electronic device adds a status identifier to the historical operating system event data based on a preset status rule.

The status identifier includes a normal identifier and an abnormal identifier.

Specifically, after determining the historical operating system event data of the to-be-detected operating system, to obtain a fault detection model with higher precision through training, the electronic device may add the status identifier to the historical operating system event data in the historical time period based on the preset status rule.

Optionally, the preset status rule may be established based on domain knowledge.

For example, the preset status rule may include: in the running process of the thread A, when CPU usage is greater than a preset threshold, determining that a status identifier of the thread A is an abnormal identifier; or in the running process of the thread A, when occupied memory space is greater than a preset memory size, determining that the status identifier of the thread A is an abnormal identifier.

In a possible implementation, because different system events may correspond to different preset status rules, the electronic device may add a status identifier to some operating system data in the historical operating system event data based on the preset status rule.

For example, when the preset status rule includes: in the running process of the thread A from 13:00 to 14:00, when the CPU usage is greater than 70%, determining that the status identifier of the thread A is an abnormal identifier; and in the running process of the thread A from 18:00 to 19:00, when the CPU usage is greater than 80%, determining that the status identifier of the thread A is an abnormal identifier, if the CPU usage is 75% in the running process of the thread A at 15:00, the status identifier may not be accurately added to the operating system event data of the thread A. In this case, the electronic device may add a status identifier to only some operating system data in the historical operating system event data other than operating system event data of the thread A.

In a possible implementation, the electronic device may further add related explanation information to the historical operating system event data based on the domain knowledge.

With reference to the foregoing example, the preset historical operating system event data is: In the running process of the thread A from 13:00 to 14:00, the CPU usage is greater than 70%, and the status identifier of the historical operating system event data is an abnormal identifier. In this case, the electronic device may further add the related explanation information to the historical operating system event data based on the domain knowledge, because a plurality of pieces of redundant code exist in the thread A in the running process of the thread A from 13:00 to 14:00, the CPU usage is greater than 70%, and a status is abnormal.

In this case, the related explanation information is added to the historical operating system event data based on the domain knowledge, so that the system fault detection result that is output by the fault detection model obtained through training is explainable.

S902: The electronic device trains a to-be-trained model based on the classification algorithm and second data, to obtain a to-be-adjusted model.

Specifically, the fault detection model may be a multi-classification mode. In this case, the electronic device trains the to-be-trained model based on the classification algorithm and the second data, to obtain the to-be-adjusted model.

The second data includes the historical operating system running data and historical operating system event data added with the status identifier; and the to-be-trained model includes a to-be-trained application feature classification model and a to-be-trained fault classification model.

In a possible implementation, the classification algorithm may be a K-nearest neighbor (k-Nearest Neighbor, KNN) classification algorithm, a Bayesian classifier algorithm, a logistic regression algorithm, or another classification algorithm. This is not limited in embodiments of this application.

An application feature classification model is used to determine an application feature of a system fault of the to-be-detected operating system.

Optionally, the application feature may include CPU-intensive, I/O-intensive, a periodic feature, and the like.

CPU-intensive, also referred to as compute-intensive, means that performance of hard disk and memory of an operating system are much better than that of a CPU. In this case, the CPU is usually fully loaded during running of the operating system. When the CPU needs to read from or write to the hard disk or memory, the hard disk or memory may complete this operation in very short time.

I/O-intensive means that performance of a CPU of an operating system is much better than that of hard disk and memory. In this case, during running of the operating system, the CPU usually waits for an I/O (hard disk/memory) read/write operation, and CPU load is not high. An I/O-intensive program usually has low CPU usage when reaching a performance limit. This may be because a task requires a large quantity of I/O operations, a pipeline link is not smooth, and a processor capability is not fully utilized.

The periodic feature means that a process, a thread, or an application of an operating system has a periodic feature.

A fault classification model is used to determine a type of a fault of the application feature of the system fault that occurs in the to-be-detected operating system.

Optionally, the type of the fault may include: a status type fault, a function type fault, a performance type fault, and the like.

In a possible implementation, to obtain a fault detection model with higher precision through training, the electronic device may obtain raw data of the historical time period corresponding to the historical operating system running data. Then, the electronic device may perform a preprocessing operation on the raw data, to obtain the historical operating system running data, and provide accurate reference data for obtaining the fault detection model through subsequent training.

The preprocessing operation is used to perform data cleaning on the raw data, to obtain complete, smooth, and noise-free current operating system running data.

Optionally, the preprocessing operation may include operations such as missing data completion, anomaly noise reduction, and metric smoothing. This is not limited in embodiments of this application.

S903: The electronic device performs parameter adjustment on the to-be-adjusted model based on the historical operating system running data and the parameter optimization algorithm, to obtain the fault detection model.

The fault detection model includes an application feature classification model and a fault classification model.

Specifically, in a process of performing model training on the to-be-adjusted model, a parameter of the to-be-adjusted model needs to be adjusted and optimized. In this case, the electronic device may perform parameter adjustment on the to-be-adjusted model based on the historical operating system running data and the parameter optimization algorithm, to obtain the fault detection model.

The parameter optimization algorithm is used to enable output precision of the to-be-trained model to reach preset precision. The preset precision is parameterized, and a parameter of the to-be-trained model is continuously adjusted by using the parameter optimization algorithm, so that an output result of the to-be-trained model is continuously close to a parameterized target value.

In a possible implementation, the parameter optimization algorithm may include a gradient descent algorithm, a momentum optimization algorithm, an adaptive learning rate optimization algorithm, and the like.

In a possible implementation, the output precision of the to-be-trained model may include a recall rate, a precision rate, an F1 score (F1 Score), and the like.

Correspondingly, the parameterized target value may include a preset value corresponding to the recall rate, a preset value corresponding to the precision rate, and a preset value corresponding to the F1 score.

It may be learned from the foregoing description that, because the preset fault identification algorithm includes the classification algorithm and the parameter optimization algorithm, the classification algorithm may be used to perform classification training on an initial model of the fault detection model, and the parameter optimization algorithm may perform parameter adjustment on the model in a classification training process, to obtain the fault detection model, to quickly and accurately determine the system fault detection result subsequently by using the fault detection model. This improves fault detection efficiency.

In a possible implementation, the "fault detection model training" procedure may be completed based on offline scenario-based training, or online usage scenario-based training.

An offline scenario means that after obtaining historical operating system data, an electronic device may migrate the historical operating system data to a laboratory scenario, and obtain a fault detection model through training in the laboratory scenario based on a preset fault identification algorithm and the historical operating system data. Subsequently, when using the fault detection model, the electronic device may migrate, based on an online migration algorithm, the fault detection model obtained through offline scenario-based training to an online usage scenario for the fault detection.

An online use scenario means that after obtaining historical operating system data, an electronic device may directly obtain a fault detection model through training based on a preset fault identification algorithm and the historical operating system data. Subsequently, when using the fault detection model, the electronic device may directly use the fault detection model for the fault detection.

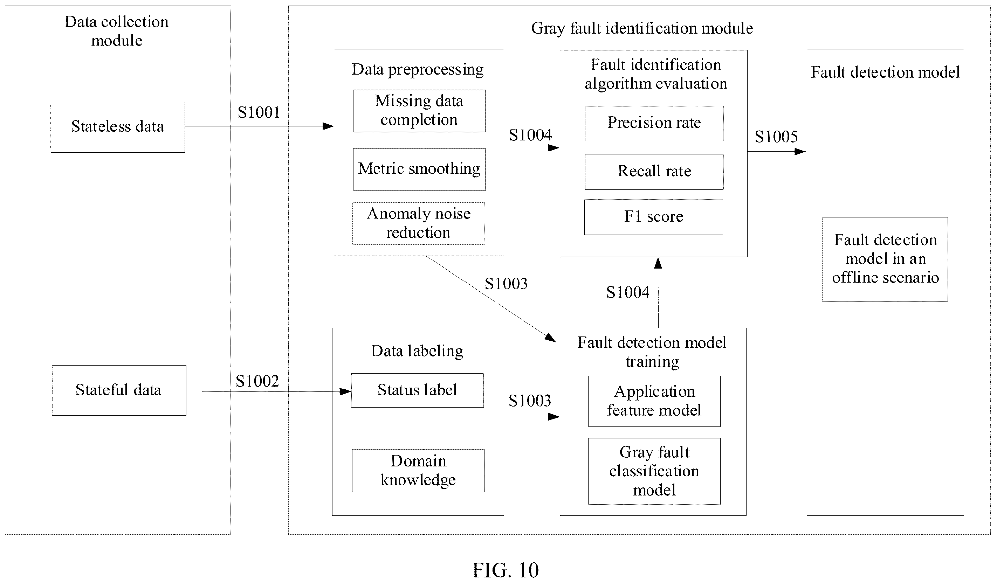

FIG. 10 is a schematic flowchart of obtaining a fault detection model through offline scenario-based training according to an embodiment of this application. With reference to FIG. 4, as shown in FIG. 10, the "fault detection model training" procedure may include the following steps.

### S1001: Data preprocessing.

Specifically, the data collection module of the electronic device may collect stateless data in the historical time period (namely, the historical operating system running data in this embodiment of this application) and stateful data in the historical time period (namely, the historical operating system event data in this embodiment of this application).

Then, a gray fault identification module of the electronic device may perform operations such as missing data completion, anomaly noise reduction, and metric smoothing on the stateless data, to provide accurate reference data for subsequent steps.

### S1002: Data labeling.

Specifically, because the stateful data includes context information, the gray fault identification module of the electronic device may add, to the stateful data, a status label indicating that an application is normal/abnormal, or the like, and label content may be customized based on domain knowledge.

In addition, the electronic device may further add related explanation information to the stateful data based on the domain knowledge.

### S1003: Fault detection model training.

Specifically, the electronic device may perform model training based on the stateful data obtained after data labeling and the stateless data, to generate an application feature classification model and a fault classification model.

### S1004: Fault identification algorithm evaluation.

Specifically, the electronic device may evaluate, by calculating precision rates, recall rates, and F1-Score metrics of the application feature classification model and the fault classification model, whether the application feature classification model and the fault classification model meet a training convergence condition.

### S1005: Fault detection model generation.

Specifically, after a fault identification algorithm is evaluated, the electronic device may generate a fault detection model in an offline scenario for test verification or online migration training.

The following describes a "fault detection" procedure.

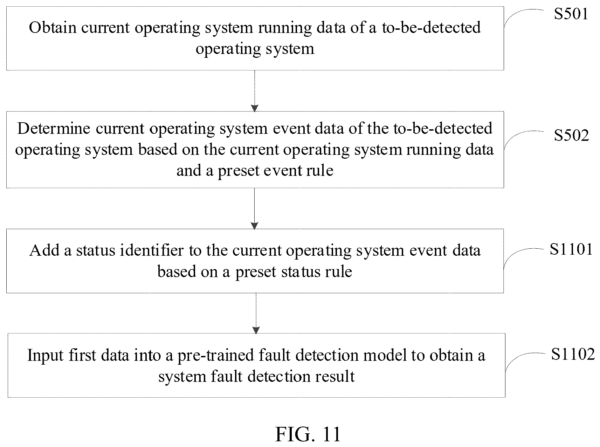

With reference to FIG. 5, as shown in FIG. 11, the method in which the electronic device determines the system fault detection result of the to-be-detected operating system based on the current operating system running data and the current operating system event data in S503 specifically includes the following steps:
S1101: The electronic device adds the status identifier to the current operating system event data based on the preset status rule.

The status identifier includes a normal identifier and an abnormal identifier.

Specifically, after determining the current operating system event data of the to-be-detected operating system, to enable the fault detection model to accurately determine the system fault detection result of the to-be-detected operating system, the electronic device may add the status identifier to the current operating system event data based on the preset status rule.

For related descriptions of adding the status identifier to the current operating system event data by the electronic device based on the preset status rule, refer to the related descriptions of adding the status identifier to the historical operating system event data by the electronic device based on the preset status rule in S901. Details are not described herein again.

S1102: The electronic device inputs first data into the pre-trained fault detection model to obtain the system fault detection result.

The first data includes the current operating system running data and current operating system event data added with the status identifier; the fault detection model is obtained through training based on historical operating system data of the to-be-detected operating system; and the historical operating system data includes historical operating system running data and historical operating system event data.

In a possible implementation, to improve accuracy of the system fault detection result output by the fault detection model, the electronic device may obtain raw data of the current time period corresponding to the current operating system running data. Then, the electronic device may perform a preprocessing operation on the raw data, to obtain the current operating system running data, and provide accurate reference data for subsequently determining the system fault detection result.

The preprocessing operation is used to perform data cleaning on the raw data, to obtain complete, smooth, and noise-free current operating system running data.

Optionally, the preprocessing operation may include operations such as missing data completion, anomaly noise reduction, and metric smoothing. This is not limited in embodiments of this application.

It may be learned from the foregoing description that, because the fault detection model is obtained through training based on the historical operating system data of the to-be-detected operating system, and the historical operating system data includes the historical operating system running data and the historical operating system event data, when determining the system fault detection result of the to-be-detected operating system, the electronic device may quickly and accurately determine the system fault detection result by using the fault detection model. This improves fault detection efficiency.

In a possible implementation, it may be learned from S902 that the to-be-trained model includes the to-be-trained application feature classification model and the to-be-trained fault classification model. Therefore, the electronic device may determine the system fault detection result by using a trained application feature classification model and a trained fault classification model. In this case, the method in which the electronic device inputs the first data into the pre-trained fault detection model to obtain the system fault detection result specifically includes:
The electronic device inputs the first data into the application feature classification model to obtain an application feature fault detection result.

The application feature fault detection result may include a CPU-intensive application feature fault detection result, an I/O-intensive application feature fault detection result, a periodic feature application feature fault detection result, and the like.

The electronic device inputs, into the fault classification model, system data that is in the first data and that corresponds to the application feature fault detection result, to obtain the system fault detection result.

The system fault detection result may include: A status type fault occurs in a CPU-intensive application, a function type fault occurs in a CPU-intensive application, a performance type fault occurs in a CPU-intensive application, a status type fault occurs in an I/O-intensive application, a function type fault occurs in an I/O-intensive application, a performance type fault occurs in an I/O-intensive application, a status type fault occurs in a periodic feature application, a function type fault occurs in a periodic feature application, and a performance type fault occurs in a periodic feature application.

It may be learned from the foregoing description that, because the fault detection model includes an application feature classification model and a fault classification model, the electronic device may sequentially determine different application features and a fault classification corresponding to each application feature based on the application feature classification model and the fault classification mode. This improves fault detection accuracy.

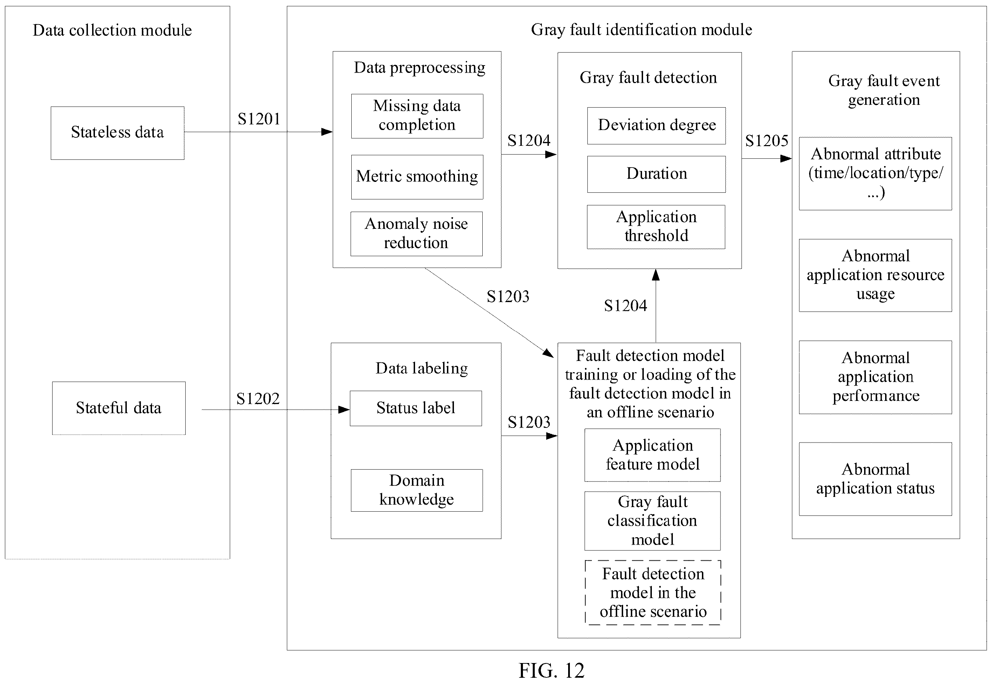

FIG. 12 is a schematic flowchart of performing fault detection based on a fault detection model obtained through pre-training according to an embodiment of this application. With reference to FIG. 4, as shown in FIG. 12, the "fault detection model training" procedure may include the following steps.

### S1201: Data preprocessing.

Specifically, the data collection module of the electronic device may collect stateless data in the current time period (namely, the current operating system running data in this embodiment of this application) and stateful data in the current time period (namely, the current operating system event data in this embodiment of this application).

Then, a gray fault identification module of the electronic device may perform operations such as missing data completion, anomaly noise reduction, and metric smoothing on the stateless data, to provide accurate reference data for subsequent steps.

### S1202: Data labeling.

Specifically, because the stateful data includes context information, the gray fault identification module of the electronic device may add, to the stateful data, a status label indicating that an application is normal/abnormal, or the like, and label content may be customized based on domain knowledge.

In addition, the electronic device may further add related explanation information to the stateful data based on the domain knowledge.

S1203: Fault detection model training or loading of the fault detection model in the offline scenario.

In a possible implementation, the electronic device may perform model training based on the stateful data obtained after data labeling and the stateless data, to generate an application feature classification model and a fault classification model.

In still another possible implementation, the electronic device may load the pre-trained fault detection model in the offline scenario based on the online migration algorithm.

### S1204: Gray fault detection.

Specifically, the electronic device performs the fault detection by using the application feature classification model based on factors such as a deviation degree and duration, and based on an application threshold defined by the application feature.

### S1205: Gray fault event gradation.

Specifically, after the gray fault detection is performed by using the application feature classification model, a final gray fault event (namely, the system fault detection result in this embodiment of this application), for example, abnormal application resource usage, abnormal application performance, or abnormal application status, may be further determined by using the fault classification model.

A detection result corresponding to the gray fault event may include an abnormal attribute of the fault event, for example, occurrence time, an occurrence location, or a type.

A type of the fault event includes resource usage, performance, and status of the fault event.

In a possible implementation, after the system fault detection result is determined, to locate a root cause of a faulty event or application of the to-be-detected operating system, the electronic device may further establish the application dependency relationship and the event propagation relationship, to further locate a root cause of a fault.

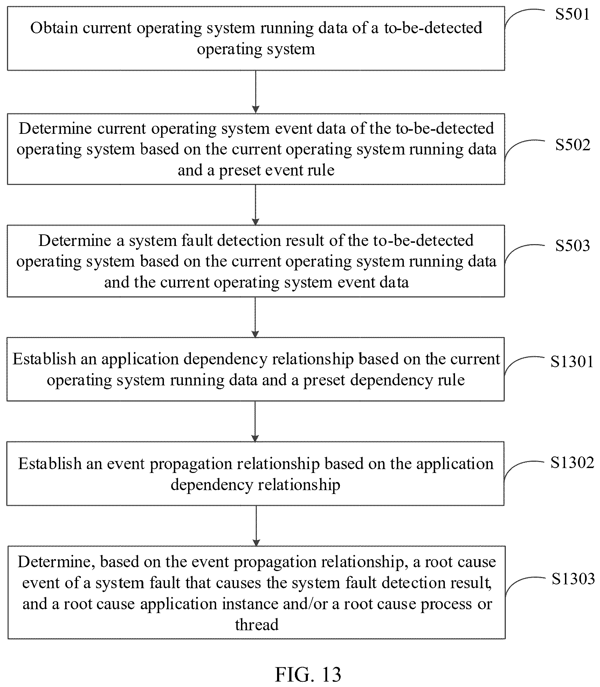

In this case, with reference to FIG. 5, as shown in FIG. 13, the fault detection method provided in this embodiment of this application further includes the following steps.

S1301: The electronic device establishes an application dependency relationship based on the current operating system running data and a preset dependency rule.

The application dependency relationship indicates a mutual dependency relationship between processes or threads and application instances in the to-be-detected operating system.

In a possible implementation, the preset dependency rule may be: when there is an execution sequence relationship between a first process or thread and a second process or thread, determining that there is a dependency relationship between the first process or thread and the second process or thread; when the first process or thread may run only based on a running result of the second process or thread, determining that there is a dependency relationship between the first process or thread and the second process or thread; or another type of rule. This is not limited in embodiments of this application.

The current operating system running data includes running data corresponding to each process or thread and each application instance. After obtaining the current operating system running data, the electronic device may establish the application dependency relationship based on the current operating system running data and the preset dependency rule.

In a possible implementation, the electronic device may establish the application dependency relationship based on a form of an application dependency graph including a node and an edge. In this case, the method in which the electronic device establishes the application dependency relationship based on the current operating system running data and the preset dependency rule specifically includes:
The electronic device constructs an application dependency graph based on the current operating system running data and the preset dependency rule.

The application dependency graph includes a plurality of application nodes and an edge between the application nodes; a primary application node in the plurality of application nodes indicates a primary thread of an application instance in the to-be-detected operating system; and a secondary application node in the plurality of application nodes indicates a dependency instance between a secondary thread of the application instance in the to-be-detected operating system and the application instance in the to-be-detected operating system; an edge between a first application node and a second application node in the plurality of application nodes indicates that there is a dependency relationship between the first application node and the second application node.

In a possible implementation, there is a one-way or two-way direct dependency relationship between primary nodes, and between a primary node and a secondary node, and there is an indirect dependency relationship or no dependency relationship between secondary nodes.

The secondary thread of the application instance may include a proxy (proxy) application instance, and the like. An attribute of the application node may include information such as time, status, and resource usage.

S1302: The electronic device establishes an event propagation relationship based on the application dependency relationship.

Specifically, because the application event is executed by the processes or the threads and the application instances in the to-be-detected operating system, after the application dependency relationship is determined, the electronic device may establish the event propagation relationship based on the application dependency relationship.

The event propagation relationship indicates a propagation relationship between application events of the to-be-detected operating system. The application events are application events corresponding to the processes or the threads and the application instances in the to-be-detected operating system.

In a possible implementation, the electronic device may establish the event propagation relationship based on a form of an event propagation graph including a node and an edge. In this case, the method in which the electronic device establishes the event propagation relationship based on the application dependency relationship specifically includes:
The electronic device constructs an event propagation graph based on the application dependency graph.

The event propagation graph includes a plurality of event nodes that are in a one-to-one correspondence with the plurality of application nodes and an edge between the event nodes; the plurality of event nodes indicate application instances corresponding to the application events of the to-be-detected operating system; and an edge between a first event node and a second event node in the plurality of event nodes indicates that there is a propagation relationship between a first event corresponding to the first event node and a second event corresponding to the second event node.

Specifically, the event node belongs to an application node.

In a possible implementation, an event corresponding to the event node includes an abnormal event, a stateful event, and a management plane event (for example, application upgrade or system patching). An attribute of the event node may include information such as time, an event type, and an abnormality level.

In a possible implementable, there is a one-way propagation relationship, a two-way propagation relationship, and a non-propagation relationship between events that occur on nodes having a dependency relationship.

S1303: The electronic device determines, based on the event propagation relationship, a root cause event of a system fault that causes the system fault detection result, and a root cause application instance and/or a root cause process or thread.

Specifically, after determining the event propagation relationship, the electronic device may determine, based on the event propagation relationship, the root cause event of the system fault that causes the system fault detection result, and the root cause application instance and/or the root cause process or thread. This implements effect of root cause correlation analysis from multidimensional and multitype data, and resolves technical problems in the general fault detection method, such as difficulty in fault root cause analysis and lack of a fine locating granularity.

In a possible implementation, the electronic device may quickly and accurately determine, based on the application dependency graph and the event propagation graph, the root cause event, and the root cause application instance and/or the root cause process or thread. In this case, the method in which the electronic device determines, based on the event propagation relationship, the root cause event of the system fault that causes the system fault detection result, and the root cause application instance and/or the root cause process or thread specifically includes:
The electronic device determines a propagation event node that has an edge with a fault event node.

The fault event node is an event node corresponding to a fault event; and the fault event is a fault event corresponding to the system fault detection result.

The electronic device determines an event corresponding to a propagation start event node in the propagation event node as the root cause event, and determines an application instance corresponding to the propagation start event node as the root cause application instance, and/or determines a process or thread corresponding to the propagation start event node as the root cause process or thread.

Specifically, the electronic device may determine an event corresponding to a propagation start event node in the propagation event node as the root cause event, and determine an application instance corresponding to the propagation start event node as the root cause application instance, and/or determine a process or thread corresponding to the propagation start event node as the root cause process or thread.

In this way, according to the fault detection method provided in this application, after the application dependency graph and the event propagation graph are determined, the root cause event may be analyzed and located based on a propagation relationship of the event propagation graph, to locate a process/thread-layer application and a corresponding root cause event, a root cause of an abnormal event at each event node may be analyzed and located based on a propagation relationship of the event propagation graph, and an application dependency path and an event propagation path are output. This implements effect of root cause correlation analysis from multidimensional and multitype data, and resolves technical problems in the general fault detection method, such as difficulty in fault root cause analysis and lack of a fine locating granularity.

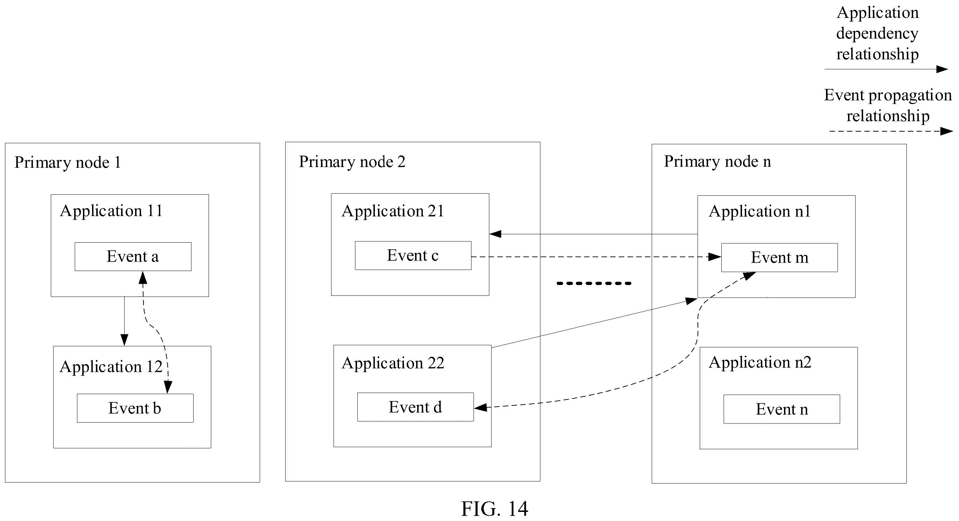

In an implementable example, as shown in FIG. 14, a primary node 1 in the to-be-detected operating system may include an application 11 and an application 12. A primary node 2 may include an application 21 and an application 22. A primary node n may include an application n1 and an application n2. The application 11 is configured to execute an event a. The application 12 is configured to execute an event b. The application 21 is configured to execute an event c. The application 22 is configured to execute an event d. The application n1 is configured to execute an event m. The application n2 is configured to execute an event n. The electronic device may obtain current operating system running data of the application 11, the application 12, the application 21, the application 22, the application n1, and the application n2 in the to-be-detected operating system. Then, the electronic device may establish the application dependency relationship based on current operating system running data and the preset dependency rule.

For example, the current operating system running data includes: the application 11 executes the event a in a current time period, and the application 12 executes the event b in the current time period. The preset dependency rule includes that there is a dependency relationship between applications that simultaneously execute events in the current time period. In this case, the electronic device may determine that there is the application dependency relationship between the application 11 and the application 12, and determine, based on the application dependency relationship between the application 11 and the application 12, that there is the event propagation relationship between the event a and the event b.

Based on a same method, the electronic device may determine that there is the application dependency relationship between the application 11 and the application 22, there is the application dependency relationship between the application 22 and the application n1, and there is the application dependency relationship between the application n1 and the application 21.

Correspondingly, the electronic device may determine that there is the event propagation relationship between the event d and the event m, and that there is the event propagation relationship between the event m and the event c.

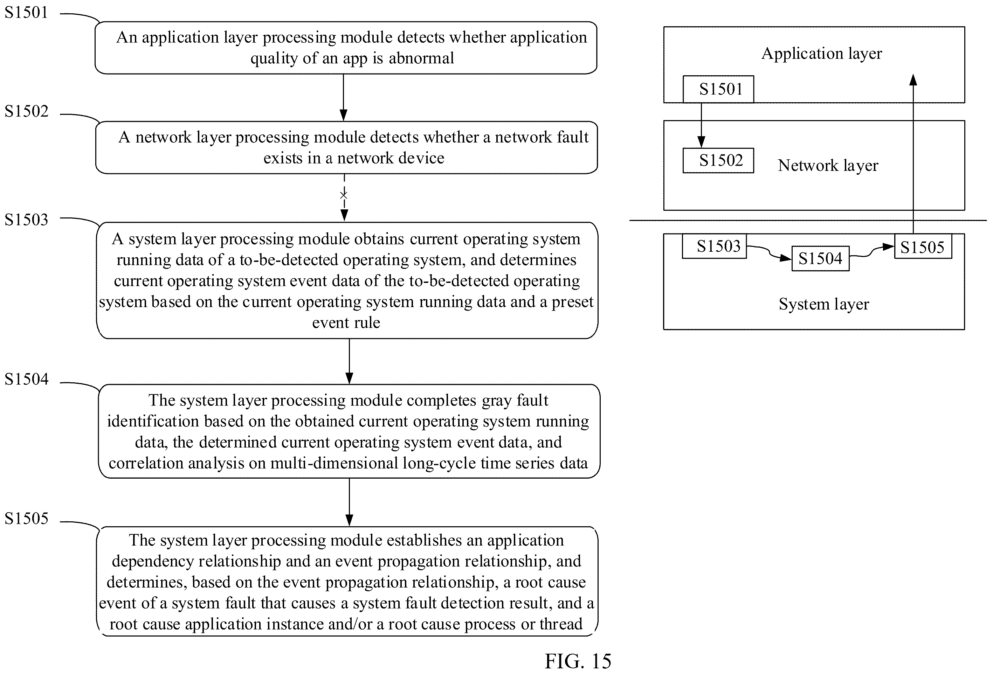

FIG. 15 is a schematic flowchart of still another fault detection method according to an embodiment of this application. As shown in FIG. 15, the fault detection method specifically includes the following steps:
S1501: An application layer processing module detects whether application quality of an app is abnormal.
S1502: A network layer processing module detects whether a network fault exists in a network device.
S1503: A system layer processing module obtains current operating system running data of a to-be-detected operating system, and determines current operating system event data of the to-be-detected operating system based on the current operating system running data and a preset event rule.

Specifically, the current operating system running data collected by the system layer processing module may include: stateless data such as metric data, logging data, and tracing data.

The current operating system event data determined by the system layer processing module may include stateful data of an event type.

S1504: The system layer processing module completes gray fault identification based on the obtained current operating system running data, the determined current operating system event data, and correlation analysis on multi-dimensional long-cycle time series data.

S1505: The system layer processing module establishes an application dependency relationship and an event propagation relationship, and determines, based on the event propagation relationship, a root cause event of a system fault that causes a system fault detection result, and a root cause application instance and/or a root cause process or thread.

It should be noted that an execution sequence of S1501, S1502, and S1503 to S1505 is not limited in embodiments of this application.

In other words, in this embodiment of this application, the application layer processing module may detect whether the application quality of the app is abnormal. There is a loose coupling relationship between detecting whether the network fault exists in the network device by the network layer processing module and detecting the system fault detection result of the to-be-detected operating system by the system layer processing module. In comparison with the general fault detection method, in the fault detection method provided in this embodiment of this application, the layer-by-layer drill-down steps are canceled, and the ITIM layer provides the independent data collection, gray fault identification, and root cause analysis capabilities, and may proactively send the system fault detection result to the APM layer and the NPMD layer, so that the application layer processing module and the network layer processing module accurately determine the gray fault based on the system fault detection result.

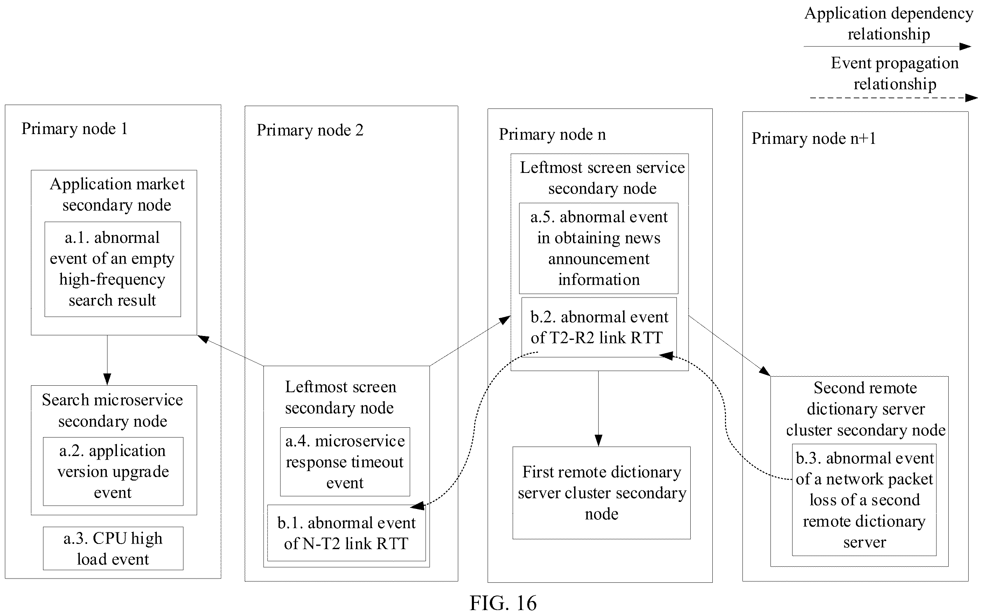

FIG. 16 shows an application dependency graph and an event propagation graph of a network I/O-related abnormal event type according to an embodiment of this application.

As shown in FIG. 16, a primary node 1 in a to-be-detected operating system may include an application market secondary node and a search microservice secondary node.

A primary node 2 may include a leftmost screen (nginx) secondary node.

A primary node n may include a leftmost screen service secondary node and a first remote dictionary server cluster (redis cluster server) secondary node.

A primary node n+1 may include a second remote dictionary server cluster secondary node.

An event at an APM layer corresponding to the application market secondary node includes: a.1. abnormal event of an empty high-frequency search result.

An event at the APM layer corresponding to the search microservice secondary node includes: a.2. application version upgrade event.

An event at the APM layer corresponding to the primary node 1 includes: a.3. CPU high load event.

An event at the APM layer corresponding to the leftmost screen secondary node includes: a.4. microservice response timeout event.

An event at an ITIM layer corresponding to the leftmost screen secondary node includes: b.1. abnormal event of N-T2 link round-trip time (round-trip time, RTT).

An event at the APM layer corresponding to the leftmost screen service secondary node includes: a.5. abnormal event in obtaining news announcement information.

An event at the ITIM layer corresponding to the leftmost screen service secondary node includes: b.2. abnormal event of T2-R2 link RTT.

An event at the ITIM layer corresponding to the second remote dictionary server cluster secondary node includes: b.3. abnormal network packet loss event of a second remote dictionary server.

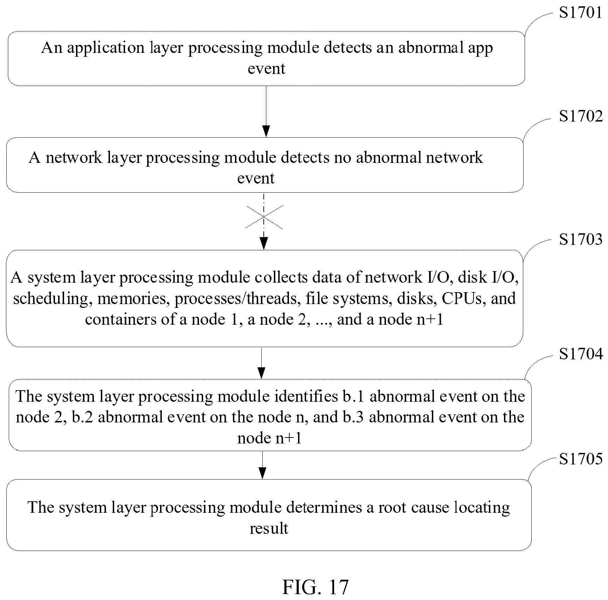

With reference to FIG. 16, FIG. 17 is a schematic flowchart of a fault detection method for a network I/O-related abnormal event type according to an embodiment of this application.

S1701: An application layer processing module detects an abnormal app event.

Specifically, the application layer processing module detects abnormal application performance degradation, which corresponds to a.4 abnormal event (microservice response timeout) on a node 2, and also detects a.1 abnormal event (abnormality of an empty high-frequency search result) on a node 1, a.2 abnormal event (application version upgrade), and a.5 abnormal event (abnormality of obtaining news announcement information) on the node n.

S1702: A network layer processing module detects no abnormal network event.

S1703: A system layer processing module collects data of network I/O, disk I/O, scheduling, memories, processes/threads, file systems, disks, CPUs, and containers of the node 1, the node 2, ..., and a node n+1.

S1704: The system layer processing module identifies b.1 abnormal event on the node 2, b.2 abnormal event on the node n, and b.3 abnormal event on the node n+1.

Specifically, the system layer processing module may identify the b.1 abnormal event (an abnormal RTT delay from Nginx of the node 2 to a leftmost screen service of the node n) on the node 2, the b.2 abnormal event (an abnormal RTT delay from a leftmost screen service of the node n to a second remote dictionary server cluster of the node n+1) on the node n, and the b.3 abnormal event (an abnormal network packet loss of a second remote dictionary server cluster) on the node n+1.

S1705: The system layer processing module determines a root cause locating result.

Specifically, an application dependency relationship may include: An application market of the node 1 depends on a search microservice of the node 1; the Ngnix service of the node 2 depends on the application market of the node 1; the Ngnix service of the node 2 depends on the leftmost screen service of the node n; the leftmost screen service of the node n depends on a first remote dictionary server cluster; and the leftmost screen service of the node n depends on the second remote dictionary server cluster of the node n+1.

A specific process of determining the root cause locating result based on an event propagation relationship is as follows: Because the leftmost screen service of the node n depends on the second remote dictionary server cluster of the node n+1, b.3 may propagate to b.2. Because the Ngnix of the node 2 depends on the leftmost screen service of the node n, b.2 may propagate to b.1. Because a root cause of the b.3 abnormal event is that a buffer (buffer) queue in a network protocol stack is full, b.1 is caused by b.3, and a root cause is the root cause of the b.3 abnormal event.

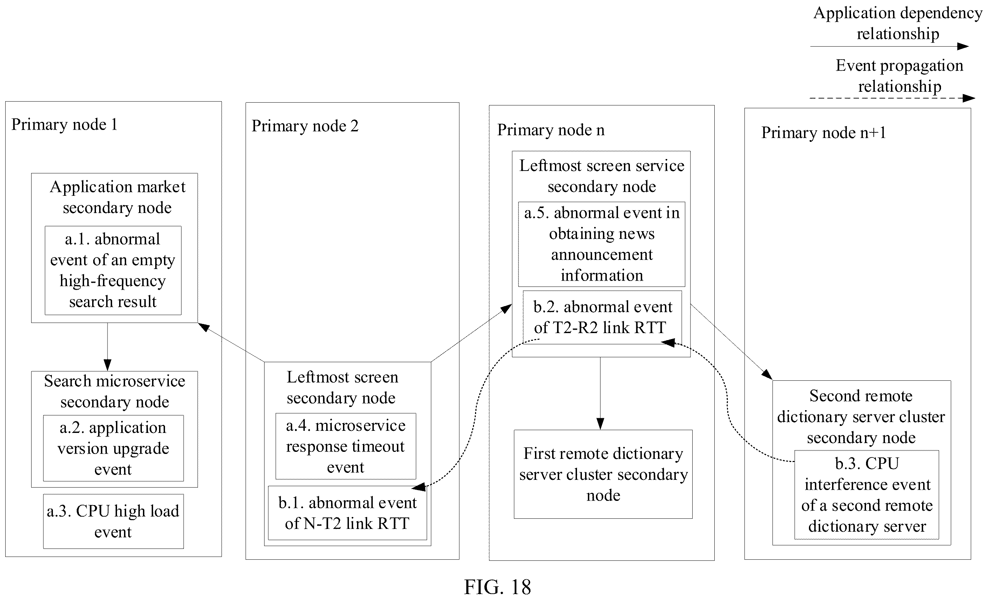

FIG. 18 is an application dependency graph and an event propagation graph of a hybrid gray fault according to an embodiment of this application.

Hybrid gray faults mean abnormal events of different types, such as network I/O, disk I/O, scheduling, a memory, a process/thread, a file system, a disk, a CPU, and a container, in an abnormal event propagation path.

As shown in FIG. 18, a primary node 1 in a to-be-detected operating system may include an application market secondary node and a search microservice secondary node.

A primary node 2 may include a leftmost screen (nginx) secondary node.

A primary node n may include a leftmost screen service secondary node and a first remote dictionary server cluster (redis cluster server) secondary node.

A primary node n+1 may include a second remote dictionary server cluster secondary node.

An event at an APM layer corresponding to the application market secondary node includes: a.1. abnormal event of an empty high-frequency search result.

An event at the APM layer corresponding to the search microservice secondary node includes: a.2. application version upgrade event.

An event at the APM layer corresponding to the primary node 1 includes: a.3. CPU high load event.

An event at the APM layer corresponding to the leftmost screen secondary node includes: a.4. microservice response timeout event.

An event at an ITIM layer corresponding to the leftmost screen secondary node includes: b.1. abnormal event of N-T2 link round-trip time (round-trip time, RTT).

An event at the APM layer corresponding to the leftmost screen service secondary node includes: a.5. abnormal event in obtaining news announcement information.

An event at the ITIM layer corresponding to the leftmost screen service secondary node includes: b.2. abnormal event of T2-R2 link RTT.

An event at the ITIM layer corresponding to the second remote dictionary server cluster secondary node includes: b.3. CPU interference (CPU abnormality) event of the second remote dictionary server.

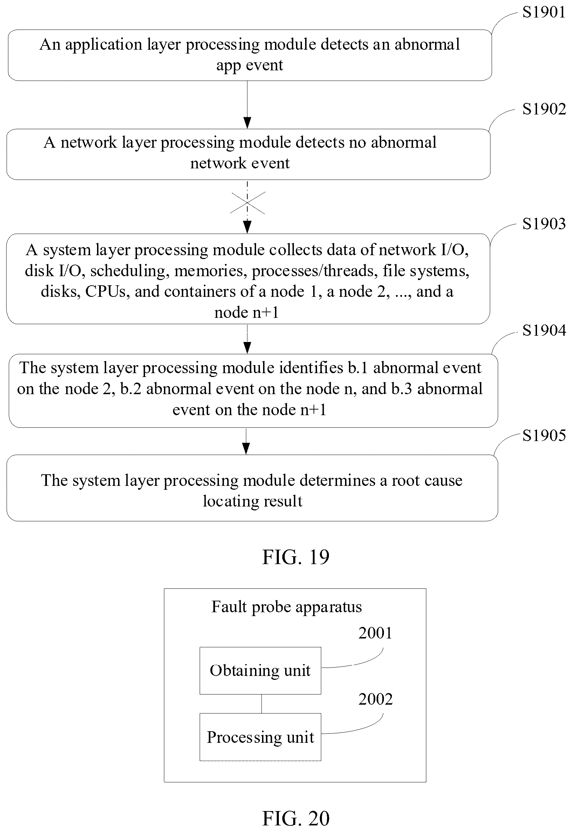

With reference to FIG. 18, FIG. 19 is a schematic flowchart of a fault detection method for a hybrid gray fault according to an embodiment of this application.

S1901: An application layer processing module detects an abnormal app event.

Specifically, the application layer processing module detects abnormal application performance degradation, which corresponds to a.4 abnormal event (microservice response timeout) on a node 2, and also detects a.1 abnormal event (abnormality of an empty high-frequency search result) on a node 1, a.2 abnormal event (application version upgrade), and a.5 abnormal event (abnormality of obtaining news announcement information) on the node n.

S1902: A network layer processing module detects no abnormal network event.

S1903: A system layer processing module collects data of network I/O, disk I/O, scheduling, memories, processes/threads, file systems, disks, CPUs, and containers of the node 1, the node 2, ..., and a node n+1.

S1904: The system layer processing module identifies b.1 abnormal event on the node 2, b.2 abnormal event on the node n, and b.3 abnormal event on the node n+1.

Specifically, the system layer processing module may identify the b.1 abnormal event (an abnormal RTT delay from Nginx of the node 2 to a leftmost screen service of the node n) on the node 2, the b.2 abnormal event (an abnormal RTT delay from a leftmost screen service of the node n to a second remote dictionary server cluster of the node n+1) on the node n, and the b.3 abnormal event (abnormal CPU interference in the second remote dictionary server cluster) on the node n+1.

S1905: The system layer processing module determines a root cause locating result.

Specifically, an application dependency relationship may include: An application market of the node 1 depends on a search microservice of the node 1; the Ngnix service of the node 2 depends on the application market of the node 1; the Ngnix service of the node 2 depends on the leftmost screen service of the node n; the leftmost screen service of the node n depends on a first remote dictionary server cluster; the leftmost screen service of the node n depends on the second remote dictionary server cluster of the node n+1; and the second remote dictionary server cluster of the node n+1 and a Spark worker mutually depend on each other.

A specific process of determining the root cause locating result based on an event propagation relationship is as follows: Because the leftmost screen service of the node n depends on the second remote dictionary server cluster of the node n+1, b.3 may propagate to b.2. Because the Ngnix of the node 2 depends on the leftmost screen service of the node n, b.2 may propagate to b.1. Because a root cause of the b.3 abnormal event is that a batch processing service of a memory cluster computing platform (Spark Worker) preempts a CPU, b.1 is caused by b.3, and a root cause is the root cause of the b.3 abnormal event.

It should be noted that an execution sequence of S1901, S1902, and S1903 to S1905 is not limited in embodiments of this application.

It may be understood that, during actual implementation, the fault detection device in embodiments of this application may include one or more hardware structures and/or software modules configured to implement the foregoing corresponding fault detection methods. These execution hardware structures and/or software modules may constitute one fault detection device.

A person of ordinary skill in the art should easily be aware that, in combination with algorithms and steps in the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

Based on such an understanding, an embodiment of this application further correspondingly provides a fault detection apparatus, which may be used in a fault detection device. FIG. 20 is a diagram of a structure of a fault detection apparatus according to an embodiment of this application. As shown in FIG. 20, the fault detection apparatus may include an obtaining unit 2001 and a processing unit 2002.

The obtaining unit 2001 is configured to obtain current operating system running data of a to-be-detected operating system. For example, with reference to FIG. 5, the obtaining unit 2001 is configured to perform S501.

The processing unit 2002 is configured to determine current operating system event data of the to-be-detected operating system based on the current operating system running data and a preset event rule, where the current operating system event data includes: data generated in a running process of a current operating system process event or thread event in the to-be-detected operating system, and context information associated with the current operating system process event or thread event. For example, with reference to FIG. 5, the processing unit 2002 is configured to perform S502.

The processing unit 2002 is further configured to determine a system fault detection result of the to-be-detected operating system based on the current operating system running data and the current operating system event data. For example, with reference to FIG. 5, the processing unit 2002 is configured to perform S503.

In a possible implementation, the electronic device includes a system layer processing module, an application layer processing module, and a network layer processing module.

The system layer processing module is configured to determine the system fault detection result of the to-be-detected operating system. For example, with reference to FIG. 7, the system layer processing module is configured to perform S701.

The system layer processing module is further configured to send the system fault detection result to the application layer processing module and the network layer processing module. For example, with reference to FIG. 7, the system layer processing module is configured to perform S702.

The application layer processing module is configured to determine an application fault detection result of the electronic device based on the system fault detection result. For example, with reference to FIG. 7, the application layer processing module is configured to perform S703.

The network layer processing module is configured to determine a network fault detection result of the electronic device based on the system fault detection result. For example, with reference to FIG. 7, the network layer processing module is configured to perform S704.

In a possible implementation, the processing unit 2002 is specifically configured to:
add a status identifier to the current operating system event data based on a preset status rule, where the status identifier includes a normal identifier and an abnormal identifier. For example, with reference to FIG. 11, the processing unit 2002 is configured to perform S1101.

The processing unit 2002 is further configured to input first data into a pre-trained fault detection model to obtain the system fault detection result, where the first data includes the current operating system running data and current operating system event data added with the status identifier, the fault detection model is obtained through training based on historical operating system data of the to-be-detected operating system, and the historical operating system data includes historical operating system running data and historical operating system event data. For example, with reference to FIG. 11, the processing unit 2002 is configured to perform S1102.

In a possible implementation, the obtaining unit 2001 is further configured to obtain historical operating system data. For example, with reference to FIG. 8, the obtaining unit 2001 is configured to perform S801.

The processing unit 2002 is further configured to obtain the fault detection model through training based on a preset fault identification algorithm and the historical operating system data. For example, with reference to FIG. 8, the processing unit 2002 is configured to perform S802.

In a possible implementation, the preset fault identification algorithm may include a classification algorithm and a parameter optimization algorithm; and the processing unit 2002 is specifically configured to:
add a status identifier to the historical operating system event data based on a preset status rule. For example, with reference to FIG. 9, the processing unit 2002 is configured to perform S901.

The processing unit 2002 is further configured to train the to-be-trained model based on the classification algorithm and second data, to obtain a to-be-adjusted model, where the second data includes the historical operating system running data and historical operating system event data added with a status identifier; and the to-be-trained model includes a to-be-trained application feature classification model and a to-be-trained fault classification model. For example, with reference to FIG. 9, the processing unit 2002 is configured to perform S902.

The processing unit 2002 is further configured to perform parameter adjustment on the to-be-adjusted model based on the historical operating system running data and the parameter optimization algorithm, to obtain the fault detection model, where the fault detection model includes an application feature classification model and a fault classification model. For example, with reference to FIG. 9, the processing unit 2002 is configured to perform S903.

In a possible implementation, the processing unit 2002 is specifically configured to:
input the first data into the application feature classification model to obtain an application feature fault detection result; and
input, into the fault classification model, system data that is in the first data and that corresponds to the application feature fault detection result, to obtain the system fault detection result.

In a possible implementation, the processing unit 2002 is further configured to establish an application dependency relationship based on the current operating system running data and a preset dependency rule, where the application dependency relationship indicates a mutual dependency relationship between processes or threads and application instances in the to-be-detected operating system. For example, with reference to FIG. 13, the processing unit 2002 is configured to perform S1301.

The processing unit 2002 is further configured to establish an event propagation relationship based on the application dependency relationship, where the event propagation relationship indicates a propagation relationship between application events of the to-be-detected operating system; and the application events are application events corresponding to the processes or the threads and the application instances in the to-be-detected operating system. For example, with reference to FIG. 13, the processing unit 2002 is configured to perform S1302.

The processing unit 2002 is further configured to determine, based on the event propagation relationship, a root cause event of a system fault that causes the system fault detection result, and a root cause application instance and/or a root cause process or thread. For example, with reference to FIG. 13, the processing unit 2002 is configured to perform S1303.

In a possible implementation, the processing unit 2002 is specifically configured to:
construct an application dependency graph based on the current operating system running data and the preset dependency rule, where the application dependency graph includes a plurality of application nodes and an edge between the application nodes; a primary application node in the plurality of application nodes indicates a primary thread of an application instance in the to-be-detected operating system; and a secondary application node in the plurality of application nodes indicates a dependency instance between a secondary thread of the application instance in the to-be-detected operating system and the application instance in the to-be-detected operating system; an edge between a first application node and a second application node in the plurality of application nodes indicates that there is a dependency relationship between the first application node and the second application node.

In a possible implementation, the processing unit 2002 is specifically configured to:
construct an event propagation graph based on the application dependency graph, where the event propagation graph includes a plurality of event nodes that are in a one-to-one correspondence with the plurality of application nodes and an edge between the event nodes; the plurality of event nodes indicate application instances corresponding to the application events of the to-be-detected operating system; and an edge between a first event node and a second event node in the plurality of event nodes indicates that there is a propagation relationship between a first event corresponding to the first event node and a second event corresponding to the second event node.

In a possible implementation, the processing unit 2002 is specifically configured to:
determine a propagation event node that has an edge with a fault event node, where the fault event node is an event node corresponding to a fault event; and the fault event is a fault event corresponding to the system fault detection result; and
determine an event corresponding to a propagation start event node in the propagation event node as the root cause event, and determine an application instance corresponding to the propagation start event node as the root cause application instance, and/or determine a process or thread corresponding to the propagation start event node as the root cause process or thread.

In a possible implementation, a system fault that causes the system fault detection result includes one or a combination of the following types of faults:
a network input/output I/O fault, a disk input/output I/O fault, a scheduling fault, a memory fault, a process or thread fault, a file system fault, a disk fault, a central processing unit CPU fault, and a container fault.

As described above, in this embodiment of this application, functional modules of the fault detection device may be obtained through division according to the foregoing method examples. The integrated module may be implemented in a form of hardware, or may be implemented in a form of a software functional module. In addition, it should be noted that, in embodiments of this application, division into the modules is an example and is merely logical function division, and may be other division in an actual implementation. For example, each functional module may be obtained through division based on each corresponding function, or two or more functions may be integrated into one processing module.

For the fault detection apparatus in the foregoing embodiment, a specific manner of performing an operation by each module and beneficial effects thereof are described in detail in the foregoing method embodiments, and details are not described herein again.

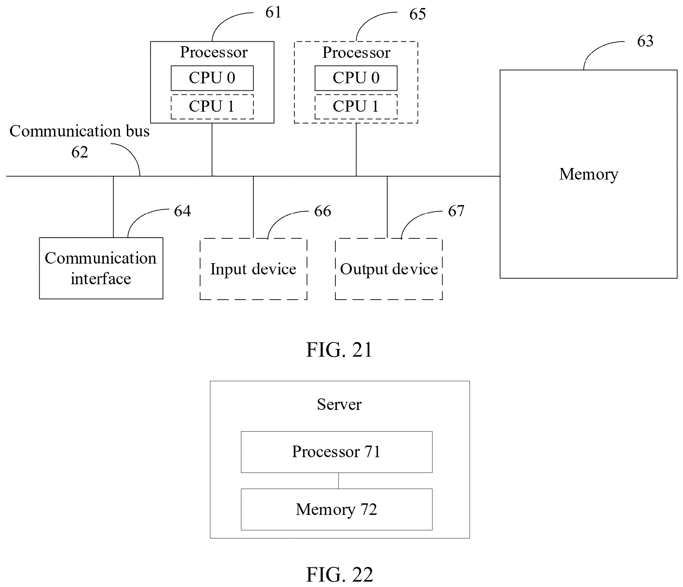

An embodiment of this application further provides an electronic device. The electronic device may be a terminal, and the terminal may be a user terminal, for example, a mobile phone or a computer. FIG. 21 is a diagram of a structure of a terminal according to an embodiment of this application.

The terminal may be the fault detection apparatus, and includes at least one processor 61, a communication bus 62, a memory 63, and at least one communication interface 64.

The processor 61 may be a processor (central processing unit, CPU), a microprocessor, an ASIC, or one or more integrated circuits configured to control program execution of the solutions of this application. In an example, with reference to FIG. 20, a function implemented by the processing unit 2002 in the fault detection device is the same as a function implemented by the processor 61 in FIG. 21.

The communication bus 62 may include a path for transmitting information between the components.

The communication interface 64 uses any apparatus like a transceiver, and is configured to communicate with another device or a communication network, for example, a server, the Ethernet, a radio access network (radio access network, RAN), or a wireless local area network (wireless local area network, WLAN). In an example, with reference to FIG. 20, a function implemented by the obtaining unit 2001 in the fault detection device is the same as a function implemented by the communication interface 64 in FIG. 21.

The memory 63 may be a read-only memory (read-only memory, ROM), another type of static storage device that may store static information and instructions, a random access memory (random access memory, RAM), or another type of dynamic storage device that may store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that may be configured to carry or store expected program code in a form of an instruction structure or a data structure and that is accessible to a computer, but is not limited thereto. The memory may exist independently and is connected to the processing unit by using a bus. The memory may be alternatively integrated with the processing unit.

The memory 63 is configured to store application program code for executing the solutions in this application, and the processor 61 controls execution. The processor 61 is configured to execute the application program code stored in the memory 63, to implement functions in the method in this application.

During a specific implementation, in an embodiment, the processor 61 may include one or more CPUs, for example, a CPU 0 and a CPU 1 in FIG. 21.

During a specific implementation, in an embodiment, the terminal may include a plurality of processors, for example, the processor 61 and a processor 65 that are shown in FIG. 21. Each of the processors may be a single-core (single-CPU) processor, or may be a multi-core (multi-CPU) processor. The processor herein may be one or more devices, circuits, and/or processing cores configured to process data (for example, computer program instructions).

During a specific implementation, in an embodiment, the terminal may further include an input device 66 and an output device 67. The input device 66 communicates with the output device 67, and may receive an input of a user in a plurality of manners. For example, the input device 66 may be a mouse, a keyboard, a touchscreen device, a sensor device, or the like. The output device 67 communicates with the processor 61, and may display information in a plurality of manners. For example, the output device 61 may be a liquid crystal display (liquid crystal display, LCD), a light emitting diode (light emitting diode, LED) display device, or the like.

A person skilled in the art may understand that the structure shown in FIG. 21 does not constitute a limitation on the terminal, and the terminal may include more or fewer components than those shown in the figure, or combine some components, or use different types of component arrangements.

An embodiment of this application further provides an electronic device. The electronic device may be, for example, a server. FIG. 22 is a diagram of a structure of a server according to an embodiment of this application. The server may be a fault detection apparatus. The server may vary greatly with a configuration or performance, and may include one or more processors 71 and one or more memories 72. The memory 72 stores at least one instruction, and the at least one instruction is loaded and executed by the processor 71 to implement the fault detection methods provided in the foregoing method embodiments. Certainly, the server may further have components such as a wired or wireless network interface, a keyboard, and an input/output interface, to perform input/output. The server may further include another component configured to implement a function of the device. Details are not described herein.

This application further provides a computer-readable storage medium including instructions. The computer-readable storage medium stores the instructions. When the instructions in the computer-readable storage medium are executed by a processor of a computer device, the computer may perform the fault detection methods provided in the foregoing embodiments. For example, the computer-readable storage medium may be a memory 63 including instructions, and the instructions may be executed by a processor 61 of a terminal to complete the foregoing methods. For another example, the computer-readable storage medium may be a memory 72 including instructions, and the instructions may be executed by the processor 71 of the server to complete the foregoing methods.

Optionally, the computer-readable storage medium may be a non-volatile computer-readable storage medium. For example, the non-volatile computer-readable storage medium may be a ROM, a RAM, a CD-ROM, a magnetic tape, a floppy disk, an optical data storage device, or the like.

This application further provides a computer program product. The computer program product includes computer instructions. When the computer instructions are run on a fault detection device, the fault detection device is enabled to perform the fault detection methods shown in any one of FIG. 5 to FIG. 19.

A person skilled in the art may easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and the embodiments are merely considered as examples, and the actual scope and the spirit of this application are pointed out by the following claims.

The foregoing descriptions about implementations allow a person skilled in the art to understand that, for the purpose of convenient and brief description, division of the foregoing functional modules is taken as an example for illustration. In actual application, the foregoing functions may be allocated to different functional modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that may store program code, for example, a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A fault detection method, applied to an electronic device, and comprising:
obtaining current operating system running data of a to-be-detected operating system;
determining current operating system event data of the to-be-detected operating system based on the current operating system running data and a preset event rule, wherein the current operating system event data comprises: data generated in a running process of a current operating system process event or thread event in the to-be-detected operating system, and context information associated with the current operating system process event or thread event; and
determining a system fault detection result of the to-be-detected operating system based on the current operating system running data and the current operating system event data.

2. The fault detection method according to claim 1, wherein the electronic device comprises a system layer processing module, an application layer processing module, and a network layer processing module; and the determining a system fault detection result of the to-be-detected operating system comprises:
determining, by the system layer processing module, the system fault detection result of the to-be-detected operating system; and
the method further comprises:
sending, by the system layer processing module, the system fault detection result to the application layer processing module and the network layer processing module;
determining, by the application layer processing module, an application fault detection result of the electronic device based on the system fault detection result; and
determining, by the network layer processing module, a network fault detection result of the electronic device based on the system fault detection result.

3. The fault detection method according to claim 1, wherein the determining a system fault detection result of the to-be-detected operating system based on the current operating system running data and the current operating system event data comprises:
adding a status identifier to the current operating system event data based on a preset status rule, wherein the status identifier comprises a normal identifier and an abnormal identifier; and
inputting first data into a pre-trained fault detection model to obtain the system fault detection result, wherein the first data comprises the current operating system running data and current operating system event data added with the status identifier; the fault detection model is obtained through training based on historical operating system data of the to-be-detected operating system; and the historical operating system data comprises historical operating system running data and historical operating system event data.

4. The fault detection method according to claim 3, further comprising:
obtaining the historical operating system data; and
obtaining the fault detection model through training based on a preset fault identification algorithm and the historical operating system data.

5. The fault detection method according to claim 4, wherein the preset fault identification algorithm comprises a classification algorithm and a parameter optimization algorithm, and the obtaining the fault detection model through training based on a preset fault identification algorithm and the historical operating system data comprises:
adding the status identifier to the historical operating system event data based on the preset status rule;
training a to-be-trained model based on the classification algorithm and second data, to obtain a to-be-adjusted model, wherein the second data comprises the historical operating system running data and historical operating system event data added with the status identifier; and the to-be-trained model comprises a to-be-trained application feature classification model and a to-be-trained fault classification model; and
performing parameter adjustment on the to-be-adjusted model based on the historical operating system running data and the parameter optimization algorithm, to obtain the fault detection model, wherein the fault detection model comprises an application feature classification model and a fault classification model.

6. The fault detection method according to claim 5, wherein the inputting first data into a pre-trained fault detection model to obtain the system fault detection result comprises:
inputting the first data into the application feature classification model to obtain an application feature fault detection result; and
inputting, into the fault classification model, system data that is in the first data and that corresponds to the application feature fault detection result, to obtain the system fault detection result.

7. The fault detection method according to claim 1, further comprising:
establishing an application dependency relationship based on the current operating system running data and a preset dependency rule, wherein the application dependency relationship indicates a mutual dependency relationship between processes or threads and application instances in the to-be-detected operating system;
establishing an event propagation relationship based on the application dependency relationship, wherein the event propagation relationship indicates a propagation relationship between application events of the to-be-detected operating system; and the application events are application events corresponding to the processes or the threads and the application instances in the to-be-detected operating system; and
determining, based on the event propagation relationship, a root cause event of a system fault that causes the system fault detection result, and a root cause application instance and/or a root cause process or thread.

8. The fault detection method according to claim 7, wherein the establishing an application dependency relationship based on the current operating system running data and a preset dependency rule comprises:
constructing an application dependency graph based on the current operating system running data and the preset dependency rule, wherein the application dependency graph comprises a plurality of application nodes and an edge between the application nodes; a primary application node in the plurality of application nodes indicates a primary thread of an application instance in the to-be-detected operating system; and a secondary application node in the plurality of application nodes indicates a dependency instance between a secondary thread of the application instance in the to-be-detected operating system and the application instance in the to-be-detected operating system; an edge between a first application node and a second application node in the plurality of application nodes indicates that there is a dependency relationship between the first application node and the second application node.

9. The fault detection method according to claim 8, wherein the establishing an event propagation relationship based on the application dependency relationship comprises:
constructing an event propagation graph based on the application dependency graph, wherein the event propagation graph comprises a plurality of event nodes that are in a one-to-one correspondence with the plurality of application nodes and an edge between the event nodes; the plurality of event nodes indicate application instances corresponding to the application events of the to-be-detected operating system; and an edge between a first event node and a second event node in the plurality of event nodes indicates that there is a propagation relationship between a first event corresponding to the first event node and a second event corresponding to the second event node.

10. The fault detection method according to claim 9, wherein the determining, based on the event propagation relationship, a root cause event of a system fault that causes the system fault detection result, and a root cause application instance and/or a root cause process or thread comprises:
determining a propagation event node that has an edge with a fault event node, wherein the fault event node is an event node corresponding to a fault event; and the fault event is a fault event corresponding to the system fault detection result; and
determining an event corresponding to a propagation start event node in the propagation event node as the root cause event, and determining an application instance corresponding to the propagation start event node as the root cause application instance, and/or determining a thread corresponding to the propagation start event node as the root cause process or thread.

11. The fault detection method according to any one of claims 1 to 10, wherein the system fault that causes the system fault detection result comprises the one or a combination of the following types of faults:
a network input/output I/O fault, a disk input/output I/O fault, a scheduling fault, a memory fault, a process or thread fault, a file system fault, a disk fault, a central processing unit CPU fault, and a container fault.

12. An electronic device, wherein the electronic device comprises:
a memory,
a communication interface, and
one or more processors, wherein
the memory stores one or more computer programs, the one or more computer programs comprise instructions, and when the instructions are executed by the electronic device, the electronic device is enabled to perform the fault detection method according to any one of claims 1 to 11.

13. A computer-readable storage medium, comprising computer instructions, wherein when the computer instructions are run on an electronic device, the electronic device is enabled to perform the fault detection method according to any one of claims 1 to 11.

14. A computer program product, comprising instructions, wherein when the instructions are run on an electronic device, the electronic device is enabled to perform the fault detection method according to any one of claims 1 to 11.
